# EUROPÄISCHE PATENTSCHRIFT

(11) **EP 3 390 119 B1**
(45) Veröffentlichungstag und Bekanntmachung des Hinweises auf die Patenterteilung: **05.02.2020**
(21) Anmeldenummer: 16815803.8
(22) Anmeldetag: 14.12.2016
(51) Int. Cl.: B60D 1/02, B60D 1/62, B60D 1/64

(54) **KUPPLUNGSVORRICHTUNG MIT ANEINANDER FESTLEGBAREN AUSRICHTBAUTEILEN**
COUPLING DEVICE WITH ALIGNING COMPONENTS WHICH CAN BE FIXED TO ONE ANOTHER
DISPOSITIF D'ATTELAGE DOTÉ D'ÉLÉMENTS D'ALIGNEMENT POUVANT ÊTRE FIXÉS LES UNS AUX AUTRES

(30) Priorität: 18.12.2015 DE 102015226096
(43) Veröffentlichungstag der Anmeldung: 24.10.2018
(73) Patentinhaber: JOST-Werke Deutschland GmbH, 63263 Neu-Isenburg (DE)
(72) Erfinder: GITZEN, Stephan, 64560 Riedstadt (DE)
(74) Vertreter: Ruttensperger Lachnit Trossin Gomoll
(86) Internationale Anmeldenummer: PCT/EP2016/080909
(87) Internationale Veröffentlichungsnummer: WO 2017/102801

(56) Entgegenhaltungen:
- EP-A1- 0 677 407
- US-A- 4 156 551
- US-A1- 2013 277 943

## Beschreibung

Die vorliegende Erfindung betrifft eine Kupplungsvorrichtung zur vorübergehenden Verbindung eines Zugfahrzeugs mit einem Nachlauffahrzeug zur Bildung eines Fahrzeugzuges gemäß dem Oberbegriff des Anspruchs 1.

Die vorliegende Erfindung betrifft Kupplungsbauteile und Kupplungsvorrichtungen, mit welchen während oder nach der Herstellung der Kupplungsverbindung automatisiert die Energie oder/und Information übertragende Steckerverbindung herstellbar ist.

Eine gattungsgemäße Kupplungsvorrichtung ist aus der US 2003/0277943 A1 bekannt. Weitere Kupplungsvorrichtungen sind aus der EP 0 434 472 A1, der EP 0 677 407 A1 und der US 4,156,551 bekannt.

Aus der Druckschrift EP 0 434 472 A1 ist bereits eine Lösung dafür bekannt, ein Zugfahrzeug und ein Nachlauffahrzeug nicht nur über ihre Kupplungsbauteile mechanisch miteinander zu einem Fahrzeugzug kuppeln, sondern auch möglichst automatisiert beim Kupplungsvorgang eine Steckerverbindung herzustellen, durch welche eine Energieversorgung des Fahrzeugzuges ausgehend von einem Fahrzeug aus Zugfahrzeug und Nachlauffahrzeug möglich ist oder/und durch welche Information in Form von Signalen oder/und Daten zwischen Zugfahrzeug und Nachlauffahrzeug übertragen werden können. Der Begriff "Energieversorgung" ist dabei möglichst allgemein zu verstehen. Er umfasst die Versorgung mit elektrischer, pneumatischer und hydraulischer Energie, also Energieformen, die insbesondere an Nutzfahrzeugen verwendet werden. Wenngleich in einem Fahrzeugzug üblicherweise das Nachlauffahrzeug vom Zugfahrzeug aus mit Energie versorgt wird, soll nicht ausgeschlossen sein, dass auch das Zugfahrzeug vom angekuppelten Nachlauffahrzeug ausgehend mit Energie versorgt werden kann, beispielsweise dann, wenn ein Energiespeicher am Nachlauffahrzeug noch mit Energievorrat wenigstens teilweise gefüllt ist, wohingegen - aus welchen Gründen auch immer - ein Vorrat der betreffenden Energieform am Zugfahrzeug erschöpft ist. Dies kann beispielsweise dann eintreten, wenn eine Fahrzeugbatterie am Zugfahrzeug defekt oder vollständig entleert ist, während am Nachlauffahrzeug eine wenigstens teilweise geladene elektrische Batterie vorhanden ist.

Die bekannte Kupplungsvorrichtung umfasst ein zugfahrzeugseitiges Ausrichtbauteil in Form eines Vierkant-Dorns, welcher in Dorn-Längsrichtung, durch eine mit dem Dorn verbundene Kolben-Zylinder-Anordnung angetrieben, ausfahrbar und einziehbar ist. Die Dorn-Längsrichtung verläuft parallel zur Zugfahrzeug-Längsrichtung, wobei die Dornspitze zum Nachlauffahrzeug hinweist. Mit dem Dorn als zugfahrzeugseitigem Ausrichtbauteil ist das zugfahrzeugseitige Steckerbauteil starr verbunden. Es umfasst eine sich orthogonal zur Dorn-Längsrichtung erstreckende Platte, welche mit dem Dorn durch Schweißen fest und unlösbar verbunden ist. In der Platte sind Steckerformationen fest aufgenommen.

Das nachlauffahrzeugseitige Ausrichtbauteil der bekannten Kupplungsvorrichtung umfasst eine zur Dorn-Mantelfläche des zugfahrzeugseitigen Ausrichtbauteils im Wesentlichen komplementäre Hülse mit einer dem Zufahrzeug zugewandten Einführhilfe in Form eines Einführtrichters. Mit dem nachlauffahrzeugseitigen Ausrichtbauteil ist das nachlauffahrzeugseitige Steckerbauteil starr verbunden. Dieses umfasst wiederum eine Platte, welche mit der Hülse starr verschweißt ist und deren die Hülse unmittelbar umgebender Plattenbereich sich orthogonal zur Hülsen-Längsrichtung erstreckt. In dieser nachlauffahrzeugseitigen Platte sind nachlauffahrzeugseitige Steckerformationen fest montiert, und zwar an Stellen, welche mit den Steckerformationen am zugfahrzeugseitigen Steckerbauteil dann korrespondieren, wenn der Dorn durch eine Ausfahrbewegung ausreichend tief in die Hülse eingeführt ist.

Das nachlauffahrzeugseitige Steckerbauteil ist starr mit dem Nachlauffahrzeug bzw. mit einer Deichsel des Nachlauffahrzeugs verbunden. Deshalb ist auch das die Hülse umfassende nachlauffahrzeugseitige Ausrichtbauteil starr mit der Deichsel des Nachlauffahrzeugs verbunden. Das zugfahrzeugseitige Steckerbauteil ist zwar starr mit dem zugfahrzeugseitigen Ausrichtbauteil verbunden, dieses ist jedoch durch ein Kugelgelenk mit dem Zugfahrzeug bzw. mit dessen Kupplungsbauteil verbunden und zwar derart, dass die verlängert gedachte Längsmittellinie eines Kupplungsbolzens des zugfahrzeugseitigen Kupplungsbauteils den Kugelmittelpunkt des genannten Kugelgelenks enthält.

Bei der bekannten Kupplungsvorrichtung wird am Ende einer erfolgreichen Ausrichtbewegung des zugfahrzeugseitigen Ausrichtbauteils relativ zum nachlauffahrzeugseitigen Ausrichtbauteil stets die Steckerverbindung hergestellt. Dies erfordert einen relativ langen Hub des Dorns, da der Hub zunächst die Steckerbauteile von Zug- und Nachlauffahrzeug relativ zueinander ausreichend ausrichten muss und, nachdem diese ausreichende Ausrichtung hergestellt ist, für eine Verwirklichung der Steckerverbindung sorgen muss. Der dadurch notwendige lange Ausricht- und Verbindungshub des Dorns erfordert zum einen bereits eine gewisse Vorausrichtung der die Ausrichtbauteile tragenden Kupplungsbauteile beim Herstellen der mechanischen Kupplungsverbindung zur Bildung des Fahrzeugzuges und erfordert zum anderen wegen des großen Hubbetrags einen erheblichen Bewegungsfreiraum, in welchem der Hub kollisionsfrei ablaufen kann.

Bei modernen Zugfahrzeugen ist dieser für den langen Hub des Ausrichtbauteils der bekannten Kupplungsvorrichtung benötigte Bewegungsfreiraum nicht immer gegeben. Nutzfahrzeuge, die vorrangig die Fahrzeuge bilden, an welchen die hier diskutierte Kupplungsvorrichtung angewendet wird, stellen trotz ihrer Herkunft von Fahrzeugherstellern, die Basis-Nutzfahrzeuge in Serienfertigung herstellen, bis zu ihrer endgültigen bestimmungsgemäßen Einsatzbereitschaft beim Kunden individualisierte Einzelanfertigungen dar. Je nach Einsatzzweck wird das seriengefertigte Basis-Nutzfahrzeug für den einzelnen Kunden individualisiert, beispielsweise indem der Bauraum unterhalb einer Ladefläche zur Aufnahme von Funktionsbaugruppen genutzt wird, wie etwa pneumatische Druckspeicher, Zusatztanks, Messuhren und Förderpumpen, wie sie beispielsweise bei Tankfahrzeugen eingesetzt werden, Betriebsmittelvorratsspeicher und dergleichen mehr. Daher wird der für die Kupplungsvorrichtung und ihre zugehörigen Bauteile verfügbare Bewegungsfreiraum mit zunehmender Komplexität der Fahrzeuge immer kleiner.

Bei der bekannten Kupplungsvorrichtung wird der zugfahrzeugseitige Dorn ausschließlich durch die Kolben-Zylinder-Anordnung ausgefahren und in seiner ausgefahrenen Position gehalten. Bereits ein geringfügiger Schaden an der Kolben-Zylinder-Anordnung kann daher zu einem unerwünschten Lösen des Dorns aus der Hülse führen, selbst während des bestimmungsgemäßen Betriebs des Fahrzeugzuges, beispielsweise durch fortwährende auf Dorn und Hülse einwirkende Erschütterungen während des Fahrbetriebs aufgrund von Fahrbahnunebenheiten und dergleichen. Löst sich der Dorn unerwünschterweise aus der Hülse, würde damit bei der bekannten Kupplungsvorrichtung auch die Steckerverbindung getrennt, was verheerende Folgen für den Fahrzeugzug haben kann, etwa weil das Nachlauffahrzeug plötzlich mangels elektrischer Energieversorgung unbeleuchtet ist oder/und mangels pneumatischer Energieversorgung nicht mehr die volle Bremskraft zur Verfügung steht.

Die US 2013/0277943 A1 und die EP 0 677 407 A1 offenbaren zusätzlich die Möglichkeit einer Verriegelung der Steckerbauteile miteinander, um diese gegen ein Lösen der hergestellten Steckerverbindung zu sichern.

Aufgabe der vorliegenden Erfindung ist es, eine gattungsgemäße Kupplungsvorrichtung derart weiterzubilden, dass ein zur steckerverbindungsvorbereitenden Ausrichtung einmal erreichter Formschlusseingriff zwischen zug- und nachlauffahrzeugseitigem Ausrichtbauteil besser als im Stand der Technik gegen ein unerwünschtes Lösen gesichert ist.

Diese Aufgabe wird erfindungsgemäß gelöst durch eine Kupplungsvorrichtung mit allen Merkmalen des Anspruchs 1.

Durch diese erfindungsgemäße Maßnahme kann im Gegensatz zum gattungsgemäßen Stand der Technik eine sichere und dauerhafte Ausrichtung von zug- und nachlauffahrzeugseitigem Ausrichtbauteil als Vorbereitung für die Herstellung und zur Aufrechterhaltung einer Steckerverbindung beibehalten werden, auch wenn es zu Störungen einer oder mehrerer Funktionskomponenten der erfindungsgemäßen Kupplungsvorrichtung kommt.

Für die Beschreibung der Kupplungsvorrichtung der vorliegenden Erfindung soll auf einen Bezugszustand zurückgegriffen werden, in welchem Zugfahrzeug und Nachlauffahrzeug auf einem gemeinsamen ebenen horizontalen Untergrund stehen und in Fahrzeuglängsrichtung aufeinander folgen. Die Fahrzeuglängsmittelebenen beider Fahrzeuge aus Zugfahrzeug und Nachlauffahrzeug sind im Bezugszustand komplanar, sodass auch die Fahrzeuglängsrichtungen beider Fahrzeuge übereinstimmen. Eine Fahrzeuglängsmittelebene im Sinne der vorliegenden Anmeldung ist dabei eine in Fahrzeuglängsrichtung verlaufende und zum Untergrund, auf dem das Fahrzeug steht, (Aufstandsuntergrund) orthogonale Ebene. Im Zweifel verläuft die Fahrzeuglängsmittelebene derart durch das Fahrzeug, dass die Räder einer Achse des Fahrzeugs zu ihr betragsmäßig gleichen Abstand aufweisen. Eine jeweilige Fahrzeug-Längsmittelachse von Zug- und Nachlauffahrzeug verläuft in der Fahrzeuglängsmittelebene des betreffenden Fahrzeugs parallel zum Untergrund.

Sofern in der vorliegenden Anmeldung nichts Abweichendes ausgesagt ist, soll dieser Bezugszustand der Beschreibung der Kupplungsvorrichtung zu Grunde gelegt werden.

In diesem Bezugszustand sind das zug- und das nachlauffahrzeugseitige Kupplungsbauteil zur Herstellung der Kupplungsverbindung längs einer Kupplungstrajektorie aneinander annäherbar und zur Trennung der Kupplungsverbindung längs der Kupplungstrajektorie voneinander entfernbar. Die Kupplungstrajektorie verläuft daher im Bezugszustand sowohl parallel zum Untergrund als auch parallel zu den komplanaren Fahrzeuglängsmittelebenen. Eine theoretisch-ideale Ausgangsorientierung von zug- und nachlauffahrzeugseitigem Kupplungsbauteil bei Einleitung eines Kupplungsvorgangs zur Herstellung der Kupplungsverbindung ist daher eine Orientierung, bei welcher die Längsmittelachse des nachlauffahrzeugseitigen Kupplungsbauteils in einer zum gemeinsamen Aufstandsuntergrund der Fahrzeuge orthogonalen Fahrzeuglängsmittelebene des Zugfahrzeugs liegt und bei welcher die Äquatorebene des nachlauffahrzeugseitigen Kupplungsglieds, die den größten Durchmesser dieses Kupplungsglieds enthält, parallel zum Aufstandsuntergrund orientiert ist.

Ein Zugfahrzeug im Sinne der vorliegenden Anmeldung ist bevorzugt eine motorisch angetriebene selbstfahrende Zugmaschine. Dies muss jedoch nicht so sein. Zugfahrzeug im Sinne der vorliegenden Anmeldung kann jedes Fahrzeug sein, an das ein nachlaufendes Fahrzeug angekuppelt ist. Daher kann in mehrgliedrigen Fahrzeugzügen ein und dasselbe Fahrzeug im Verhältnis zu seinem ihm im Fahrzeugzug vorauseilenden Fahrzeug, an das es angekuppelt ist, Nachlauffahrzeug sein und kann im Verhältnis zu einem ihm nachlaufenden Fahrzeug, das an es angekuppelt ist, Zugfahrzeug sein. Dies trifft beispielsweise auf Fahrzeugzüge zu mit einem Sattelauflieger, der an ein selbstfahrendes Zugfahrzeug angekuppelt ist und an den ein Dolly angekuppelt ist, der selbst wiederum einen Sattelauflieger ankuppeln kann. Dort kann die erfindungsgemäße Kupplungsvorrichtung insbesondere zwischen dem erstgenannten Sattelauflieger und dem Dolly angeordnet sein. Dies trifft beispielsweise ebenso auf Fahrzeugzüge zu, bei welchen an ein selbstfahrendes Zugfahrzeug ein Zentralachsanhänger und an diesen ein Starrdeichselanhänger angekuppelt ist. Dort kann die erfindungsgemäße Kupplungsvorrichtung zwischen dem Zugfahrzeug und dem Zentralachsanhänger oder/und zwischen dem Zentralachsanhänger und dem Stardeichselanhänger angeordnet sein.

Weiterhin soll in der vorliegenden Anmeldung grundsätzlich ein Bauteil A als ein Bauteil B tragend angesehen werden, wenn Bauteil A mit Bauteil B derart konstruktiv verbunden ist, dass die Bewegung des Bauteils B eine Summe aus der Bewegung des Bauteils A und der Relativbewegung des Bauteils B relativ zum Bauteil A ist.

Die Längsmittelachse des zugfahrzeugseitigen Kupplungsglieds ist im Falle von dessen Ausbildung als Kupplungsbolzen in der Regel parallel zur Gierachse des Zugfahrzeugs orientiert. In jenen Fällen, in denen das zugfahrzeugseitige Kupplungsglied aufgrund seiner Gestalt keine eindeutige Längsmittelachse aufweist, etwa im Falle einer Kupplungskugel einer Kugelkupplung, soll als Längsmittelachse des Kupplungsglieds im oben bezeichneten Bezugszustand eine das Kupplungsglied parallel zur Gierachse des Zugfahrzeugs durchsetzende Längsmittelachse angenommen werden. Fachleute werden einem zugfahrzeugseitigen Kupplungsglied stets auch im nicht fertig montierten Zustand seine Orientierung relativ zum Zugfahrzeug ansehen.

Zur Festlegung von zug- und das nachlauffahrzeugseitigem Ausrichtbauteil aneinander kann gemäß einer bevorzugten konstruktiven Variante vorgesehen sein, dass das zug- und das nachlauffahrzeugseitige Ausrichtbauteil bei Erreichen oder Überschreiten einer vorbestimmten Annäherung aneinander, insbesondere bei Erreichen oder Überschreiten einer vorbestimmten Einführtiefe eines Ausrichtvorsprungs eines Ausrichtbauteils aus zug- und nachlauffahrzeugseitigem Ausrichtbauteil in die Ausrichtausnehmung des jeweils anderen Ausrichtbauteils, gegen ein Entfernen voneinander sperrbar sind.

Grundsätzlich kann nämlich zur erleichterten Ausrichtung der beiden Ausrichtbauteile miteinander vorgesehen sein, dass die Ausrichtformation des einen Ausrichtbauteils aus zug- und nachlauffahrzeugseitigem Ausrichtbauteil einen sich zu seinem freien Längsende hin verjüngenden Ausrichtvorsprung und die Ausrichtformation des jeweils anderen Ausrichtbauteils eine zum Ausrichtvorsprung wenigstens abschnittsweise komplementäre sich zu ihrem freien Längsende aufweitende Ausrichtausnehmung als ein Ausrichtmaul aufweist, wobei der Ausrichtvorsprung zur Einführung in die Ausrichtausnehmung ausgebildet ist. Dabei können aufgrund einer Relativbeweglichkeit wenigstens eines der Steckerbauteile relativ zu dem es tragenden Ausrichtbauteil der Öffnungswinkel des Ausrichtmauls und der Verjüngungswinkel des Ausrichtvorsprungs verhältnismäßig groß gewählt sein, beispielsweise größer als 60° oder sogar größer als 90°.

Konstruktiv kann der Ausrichtvorsprung eine konische oder/und kegelstumpfförmige oder/und tetraedrische oder/und pyramidonale oder/und allgemein polyedrische sich verjüngende Gestalt aufweisen und kann die Ausrichtausnehmung eine entsprechende negativ-konische oder/und negativ-kegelstumpfförmige oder/und negativ-tetraedrische oder/und negativ-pyramidonale oder/und allgemein negativ-polyedrische sich verjüngende Gestalt aufweisen. Im Falle allgemein polyedrischer sich verjüngender Gestalten des Ausrichtvorsprungs kann dieser auch mehrere Verjüngungswinkel in unterschiedlichen Ebenen aufweisen, wobei dann vorzugsweise kein Verjüngungswinkel kleiner als 45°, bevorzugt kleiner als 60° ist, um einen möglichst kurzen und dennoch bereits mit kurzem Bewegungsweg wirksamen Ausrichtvorsprung zu erhalten.

Grundsätzlich soll nicht ausgeschlossen sein, dass eine Sperrung der beiden Ausrichtbauteile gegen Entfernen voneinander durch eine manuelle Sperrbetätigung erfolgt. Bevorzugt sind die Ausrichtbauteile jedoch selbsttätig gegen ein Entfernen voneinander sperrbar.

Zur Realisierung der Sperrung von Ausrichtvorsprung und Ausrichtausnehmung gegen ein Entfernen weist erfindungsgemäß ein Ausrichtbauteil aus zug- und nachlauffahrzeugseitigem Ausrichtbauteil einen Sperrbügel oder eine Sperröse auf. Bevorzugt überspannt der Sperrbügel eine Ausnehmung, in die ein Sperrglied des jeweils anderen Ausrichtbauteils zum Hintergriff des Sperrbügels hinein bewegt werden kann. Der Sperrbügel ist zur Erzielung einer möglichst hohen Stabilität an seinen beiden Längsenden bzw. die Längsenden enthaltenden Längsendbereichen an dem ihn tragenden Ausrichtbauteil befestigt. Aus Gründen einfacher Montage ist der Sperrbügel oder die Sperröse bevorzugt an dem den Ausrichtvorsprung aufweisenden Ausrichtbauteil vorgesehen und zwar bevorzugt in Annäherungsrichtung des Ausrichtvorsprungs an die Ausrichtausnehmung an dem vorauseilenden Längsende des Ausrichtvorsprungs.

Das jeweils andere Bauteil aus zug- und nachlauffahrzeugseitigen Ausrichtbauteil weist dann erfindungsgemäß einen Sperrbolzen oder einen Sperrhaken auf, welcher dazu ausgebildet und angeordnet ist, den Sperrbügel bzw. die Sperröse formschlüssig zu hintergreifen.

Der Sperrhaken ist zur Herstellung eines Sperreingriffs mit dem Sperrbügel oder der Sperröse erfindungsgemäß beweglich, insbesondere schwenkbar, zwischen einer Einführstellung, in welcher der Sperrbügel bzw. die Sperröse an einem Hakenschenkel des Sperrhakens vorbei in einer Einführrichtung in ein Hakenmaul einführbar ist, und einer Sperrstellung, in welcher der Hakenschenkel den dann im Hakenmaul befindlichen Sperrbügel bzw. einen im Hakenmaul befindlichen Abschnitt der Sperröse hintergreift und so den Sperrbügel bzw. die Sperröse gegen ein Ausziehen entgegen der Einführrichtung sichert. Im Falle der Verwendung einer Sperröse wird diese vorzugsweise vom Sperrhaken zur Erzielung eines Formschlusseingriffs als wirksamen Auszugschutzes in dessen Sperrstellung durchsetzt.

Zur einfachen selbsttätigen Sperrung von Ausrichtvorsprung und Ausrichtausnehmung gegen ein Entfernen voneinander kann der Sperrhaken einen Auslöseschenkel aufweisen, welcher während der Bewegung des Sperrhakens von seiner Einführstellung in seine Sperrstellung einen nachfolgend näher erläuterten Riegel von dessen Verriegelungsstellung in dessen Freigabestellung verstellt.

Eine unerwünschte unbeabsichtigte Bewegung eines Steckerbauteils von einer Anfangsstellung in eine die Steckerverbindung ermöglichende Endstellung kann dann verhindert werden, wenn das Steckerbauteil unmittelbar selbst oder mittelbar über ein das Steckerbauteil zur Bewegung antreibendes Antriebsbauteil wenigstens in einer Anfangsstellung gegen eine Bewegung zur Endstellung hin verriegelbar ist. Da aufgrund ihrer Bewegungskopplung die Anfangsstellung des Steckerbauteils mit der Anfangsstellung des Antriebsbauteils ebenso korrespondiert wie die Endstellungen der beiden Bauteile, wird nachfolgend nicht zwischen der Anfangsstellung von Steckerbauteil und Antriebsbauteil unterschieden. Für die Endstellungen der Bauteile gilt Entsprechendes.

Bevorzugt ist das Antriebsbauteil unmittelbar in seiner Anfangsstellung verriegelbar. Hierzu ist bevorzugt der oben bereits genannte Riegel vorgesehen sein, welcher verstellbar ist zwischen einer Verriegelungsstellung, in der er das Antriebsbauteil oder das Steckerbauteil in der Anfangsstellung gegen eine Bewegung zur Endstellung hin verriegelt, und einer Freigabestellung, in der er das Antriebsbauteil oder das Steckerbauteil zur Bewegung zur Endstellung hin freigibt.

Um eine möglichst selbsttätige Verriegelung des Antriebsbauteils in der Anfangsstellung bewirken zu können, ist der Riegel bevorzugt in die Verriegelungsstellung vorgespannt, sodass der Riegel dann aufgrund seiner Vorspannung in die Verriegelungsstellung gelangen kann, wenn das Antriebsbauteil oder das Steckerbauteil, etwa zur Trennung einer zuvor hergestellten Steckerverbindung, zurück in die Anfangsstellung bewegt wird. Bevorzugt greift der Riegel in seiner Verriegelungsstellung in eine Ausnehmung am Antriebsbauteil oder am Steckerbauteil ein. Dieser Formschlusseingriff kann dann in der Freigabestellung gelöst sein. Das Stecker oder/und das Antriebsbauteil sind dabei von jenem Ausrichtbauteil getragen, an dem der Sperrhaken verstellbar angeordnet ist. Dies ist bevorzugt das Ausrichtbauteil mit der Ausrichtausnehmung.

Bevorzugt ist der Auslöseschenkel aus Stabilitätsgründen einstückig mit dem zuvor genannten Hakenschenkel ausgebildet, wobei der Auslöseschenkel, der Hakenschenkel und eine den Auslöseschenkel und den Hakenschenkel verbindende Basis zwischen sich das zuvor genannte Hakenmaul einfassen. Eine einstückige Ausbildung muss jedoch nicht sein. Der Hakenschenkel und der Auslöseschenkel können sogar relativ zueinander beweglich miteinander zur Bildung des Sperrhakens verbunden sein.

Zur Erleichterung der Verstellung des Riegels durch den Auslöseschenkel kann letzterer ausgehend von der den Auslöseschenkel und den Hakenschenkel verbindenden Basis des Sperrhakens eine größere Längenerstreckung aufweisen als der den Sperrbügel hintergreifende bzw. die Sperröse durchsetzende Hakenschenkel. Dann, wenn der Hakenschenkel kürzer als der Auslöseschenkel ausgeführt ist, kann die Sperröse mit einem kleineren Durchmesser ausgeführt sein bzw. kann der sich entgegen der Einführrichtung hinter dem Sperrbügel befindende Aufnahmeraum für den Hakenschenkel kleiner ausgeführt werden, da ein kürzerer Hakenschenkel insbesondere mit der bevorzugten Schwenkbewegung der Sperrhakens auch in kleinere Aufnahmeräume einfach und sicher einführbar und aus diesen wieder entfernbar ist.

Mit dem zuvor genannten Auslöseschenkel kann die Einführbewegung des Ausrichtvorsprungs in das Ausrichtmaul in vorteilhafter Weise zur Freigabe des bevorzugt vom Riegel in dessen Verriegelungsstellung festgelegten Antriebsbauteils verwendet werden. Somit kann dann, wenn die Ausrichtbauteile von Zugfahrzeug und Nachlauffahrzeug sich einander ein vorbestimmtes Maß angenähert haben, so dass eine selbsttätige Verriegelung der beiden Ausrichtformationen aneinander ausgelöst wird, mit dieser Verriegelung gleichzeitig das Antriebsbauteil oder das Steckerbauteil zur Bewegung aus seiner Anfangsstellung in seine Endstellung freigegeben werden. Folglich ist mit der vorbestimmten Annäherung der Ausrichtformationen aneinander nicht nur eine Sicherung der beiden Ausrichtformationen gegen Entfernung voneinander realisierbar, sondern es ist damit auch eine Verlagerung des mit dem Antriebsbauteil zur gemeinsamen Bewegung gekoppelten Steckerbauteils von der Anfangsstellung in die Endstellung auslösbar.

Nicht nur kann der Auslöseschenkel des Sperrhakens während der Bewegung des Sperrhakens von seiner Einführstellung in seine Sperrstellung den Riegel in dessen Freigabestellung verstellen, sondern bei geeigneter Gestaltung des Riegels kann der Riegel den Sperrhaken in dessen Sperrstellung gegen eine Bewegung zurück in dessen Einführstellung sichern. Hierzu kann ein Abschnitt des Riegels in Anlageeingriff mit einem Abschnitt des Auslöseschenkels gelangen, sodass der Riegelabschnitt den Auslöseschenkel und mit diesem den gesamten Sperrhaken körperlich an einer Bewegung von dessen Sperrstellung weg zu dessen Einführstellung hin hindert. Bevorzugt ist der Riegel in Verstellrichtung des Sperrhakens von der Einführrichtung in die Sperrstellung so kurz ausgebildet, dass der Auslöseschenkel sich über das ihm in der Sperrstellung nähere Längsende des Riegels hinaus bewegt, sodass der Riegel mit seinem dem Auslöseschenkel in dessen Sperrstellung näheren Längsende an dessen zum gegenüberliegenden Hakenschenkel hinweisenden Flanke in Anlageeingriff gelangen kann. Dieser Anlageeingriff wird durch die bevorzugte Vorspannung des Riegels in dessen Verriegelungsstellung unterstützt. Der Riegel ist hierzu vorzugsweise derart verschwenkbar angeordnet, dass beiderseits der Riegel-Schwenkachse je ein Riegelabschnitt gelegen ist, wobei ein auf einer Seite der Riegel-Schwenkachse gelegener Riegelabschnitt das Antriebsbauteil in dessen Anfangsstellung festlegt und der auf der anderen Seite der Riegel-Schwenkachse gelegene Riegelabschnitt durch den Auslöseschenkel zur Verstellung des Riegels in die Freigabestellung betätigbar ist und den Auslöseschenkel in der Sperrstellung des Sperrhakens dann gegen in Bewegung in die Einführstellung sichert, wenn sich der Riegel in der Verriegelungsstellung befindet. Die Schwenkachse des Riegels durchsetzt diesen vorzugsweise orthogonal.

Alternativ kann der Auslöseschenkel in der Sperrstellung des Sperrhakens in eine Ausnehmung des Riegels eingreifen, sodass der Riegel zumindest dann, wenn er sich in der Verriegelungsstellung befindet, auch auf diese Weise den Auslöseschenkel gegen eine Bewegung von dessen Sperrstellung zu dessen Einführstellung hin sichern kann.

Die oben genannte bevorzugte selbsttätige Sperrbarkeit der Ausrichtbauteile gegen ein Entfernen voneinander aus dem Formschlusseingriff kann in einfacher aber wirkungsvoller Form dadurch erhalten werden, dass der oben genannte Sperrbügel oder die Sperröse bei Erreichen oder Überschreiten der vorbestimmten Annäherung der Ausrichtbauteile aneinander zur Anlage an ein Trigger-Bauteil kommen, das bei fortgesetzter Annäherungsbewegung über die vorbestimmte Annäherung hinaus durch den hergestellten Anlageeingriff mit dem Sperrbügel oder der Sperröse mitbewegt wird und so eine Bewegung des Sperrglieds in eine den Sperrbügel hintergreifende oder die Sperröse durchsetzende Position bewirken kann. Das Trigger-Bauteil kann die Bewegung des Sperrglieds auslösend freigeben oder sogar das Sperrglied zu der Bewegung antreiben bzw. die Annäherungsbewegung des Sperrbügels bzw. der Sperröse als Antriebsbewegung auf das Sperrglied übertragen. Ist etwa der oben genannte Hakenschenkel das Sperrglied, kann der Auslöseschenkel das Trigger-Bauteil sein. Bevorzugt sind dann Haken- und Auslöseschenkel gemeinsam um eine gemeinsame Schwenkachse schwenkbar.

Vorzugsweise ist die Steckerverbindung ausschließlich durch eine Annäherungsbewegung, besonders bevorzugt durch eine geradlinige Annäherungsbewegung der Steckerbauteile aufeinander zu herstellbar, ohne dass das zug- und das nachlauffahrzeugseitige Steckerbauteil bei hergestellter Steckerverbindung unmittelbar miteinander verrastet oder in ähnlicher Weise positionsgesichert sind.

Bei hergestellter Steckerverbindung kontaktieren sich unmittelbar die Steckerformationen von zug- und nachlauffahrzeugseitigem Steckerbauteil. Unmittelbar über die Steckerformationen wird bei hergestellter Steckerverbindung Energie oder/und Information zwischen Zug- und Nachlauffahrzeug übertragen. Eine Steckerformation kann ein männlicher Kontaktstecker und eine dazu passende weitere Steckerformation kann eine weibliche Kontaktbuchse sein. Jedes Steckerbauteil kann ein Steckerbauteilgestell aufweisen an dem die Steckerformation des Steckerbauteils starr oder relativ zum Steckerbauteilgestell beweglich aufgenommen ist.

Ebenso kann jedes Ausrichtbauteil ein Ausrichtgestell aufweisen an dem die Ausrichtformation des Ausrichtbauteils starr oder relativ zum Ausrichtgestell beweglich aufgenommen ist.

Insbesondere dann, aber nicht nur dann, wenn die Ausrichtformation des zugfahrzeugseitigen Ausrichtbauteils in der Annäherungsrichtung des zugfahrzeugseitigen Kupplungsbauteils an das nachlauffahrzeugseitige Kupplungsbauteil beim Ankuppeln von der Längsmittelachse des zugfahrzeugseitigen Kupplungsglieds versetzt angeordnet ist, ist es vorteilhaft, wenn die Ausrichtformation des zugfahrzeugseitigen Ausrichtbauteils längs der Höhen- bzw. Gierachse des Zugfahrzeugs verlagerbar ist. Auch hierdurch werden Relativbewegungen zwischen den Ausrichtbauteilen und den sie jeweils tragenden Kupplungsbauteilen ermöglicht, sodass Nickbewegungen von Zug- und Nachlauffahrzeug bei hergestellter Kupplungsverbindung relativ zueinander möglich sind, ohne dass eine ebenfalls hergestellte Steckerverbindung oder die in Formschlusseingriff stehenden Ausrichtformationen von Zug- und Nachlauffahrzeug hierdurch beschädigt werden würden.

Um trotz der Verlagerbarkeit der zugfahrzeugseitigen Ausrichtformation längs der Gierachse des Zugfahrzeugs einen Formschlusseingriff zwischen zug- und nachlauffahrzeugseitiger Ausrichtformation während der Herstellung einer Kupplungsverbindung herstellen zu können, ist es überdies vorteilhaft, wenn die Ausrichtformation des zugfahrzeugseitigen Ausrichtbauteils gegen die Vorspannkraft einer Vorspanneinrichtung längs der Zugfahrzeug-Höhenachse verlagerbar ist, da die Vorspanneinrichtung dann die Ausrichtformation nach Wegfall der Kupplungsverbindung stets in eine definierte Ausgangsposition bzw. Ruhelage zurückstellen kann, auf welche die nachlauffahrzeugseitige Ausrichtformation zur erfolgreichen Herstellung eines Formschlusseingriffs mit der zugfahrzeugseitigen Ausrichtformation vorjustiert sein kann.

Bevorzugt liegt eine Ruhelage der zugfahrzeugseitigen Ausrichtformation, die diese dann einnimmt, wenn sie - abgesehen von der Vorspanneinrichtung - frei vom Einfluss äußerer Kräfte und Momenten ist, nicht am Ende des Relativbewegungswegs der Ausrichtformation relativ zum Kupplungsbauteil, sodass die zugfahrzeugseitige Ausrichtformation ausgehend von der Ruhelage relativ zu dem sie tragenden zugfahrzeugseitigen Kupplungsbauteil in entgegengesetzte Richtungen längs der Zugfahrzeug-Höhenachse verlagerbar sein kann.

Bauraumsparend kann dies konstruktiv derart gelöst sein, dass die Vorspanneinrichtung zwei koaxiale, sich vorzugsweise wenigstens abschnittsweise überlappende Federn umfasst, welche die Ruhelage der zugfahrzeugseitigen Ausrichtformation definieren und von welchen jede die Ausrichtformation in eine andere von zwei entgegengesetzten Richtungen längs der Zugfahrzeug-Höhenachse vorspannt. Gerade die überlappende Anordnung der Federn sorgt für eine vorteilhafte Vorspannkraft in entgegengesetzte Richtungen längs der Zugfahrzeug-Höhenachse bei geringer Bauraumbeanspruchung.

Um für eine möglichst definierte Relativbewegung der zugfahrzeugseitigen Ausrichtformation relativ zum zugfahrzeugseitigen Kupplungsbauteil längs der Zugfahrzeug-Höhenachse zu sorgen, kann die zugfahrzeugseitige Ausrichtformation längs einer Mehrzahl paralleler und mit Abstand voneinander angeordneter Führungseinrichtungen zur Bewegung längs der Zugfahrzeug-Höhenachse geführt sein. Bevorzugt befindet sich die zugfahrzeugseitige Ausrichtformation zwischen wenigstens zwei Führungseinrichtungen, um weiter Bauraum zu sparen. Als Führungseinrichtungen können grundsätzlich Führungsschienen und dgl. verwendet werden. Einfach und wirkungsvoll können die Führungseinrichtungen Führungsstangen umfassen, welche geführte Abschnitte des zugfahrzeugseitigen Ausrichtbauteils durchsetzen und so für eine möglichst präzise Führung der zugfahrzeugseitigen Ausrichtformation oder des zugfahrzeugseitigen Ausrichtbauteils insgesamt sorgen können. Wenngleich eine beliebige Mehrzahl von Führungseinrichtungen vorgesehen sein kann, reicht das Vorsehen von zwei parallelen Führungseinrichtungen, insbesondere Führungsstangen, aus. Die Führungsstangen sind vorzugsweise orthogonal zur Zugfahrzeug-Höhenachse und ebenso orthogonal zur Annäherungsrichtung von zug- und nachlauffahrzeugseitigem Kupplungsbauteil bei der Herstellung einer Kupplungsverbindung mit Abstand voneinander angeordnet. Dies bedeutet, dass bei fertig am Zugfahrzeug montiertem zugfahrzeugseitigem Kupplungsbauteil die Führungseinrichtungen bevorzugt längs einer Parallelen zur Nickachse des Zugfahrzeugs mit Abstand voneinander angeordnet sind.

Zur Sicherstellung der Schwenkbarkeit der zugfahrzeugseitigen Ausrichtformation um die Nick-Ausrichtachse ist bevorzugt an jeder Führungseinrichtung je ein Gelenk längs der Zugfahrzeug-Höhenachse verschieblich geführt, welches eine Drehung um wenigstens eine zur Zugfahrzeug-Höhenachse orthogonale, vorzugsweise sowohl zur Zugfahrzeug-Höhenachse als auch zur Annäherungsrichtung von zug- und nachlauffahrzeugseitigem Kupplungsbauteil bei Herstellung einer Kupplungsverbindung orthogonale Achse gestattet.

Zur Vermeidung von Verspannungen in der Führungseinrichtung ist es bevorzugt, wenn jedes der an einer Führungseinrichtung verschieblich geführten Gelenke eine Drehung um zwei sowohl zueinander als auch zur Zugfahrzeug-Höhenachse orthogonale Drehachsen gestattet. Konstruktiv besonders einfach kann das Gelenk mit geringem Bauraumaufwand als Kugelgelenk realisiert sein. Bevorzugt durchsetzt daher jede der Führungseinrichtungen eine Gelenkkugel, welche an der Führungseinrichtung längs der Zugfahrzeug-Höhenachse verschieblich geführt ist.

Alternativ oder zusätzlich kann die wenigstens eine Führungseinrichtung um die Nick-Ausrichtachse schwenkbar sein und die Ausrichtformation an dieser translatorisch, vorzugsweise ausschließlich translatorisch verlagerbar sein. Bevorzugt ist die Führungseinrichtung in eine Ruhelage vorgespannt sein, in welcher sie die Ausrichtformation längs der Zugfahrzeug-Höhenachse führt,

Wenngleich es grundsätzlich ausreichen kann, nur ein Gelenk an nur einer Führungseinrichtung durch eine Vorspanneinrichtung in eine Ruhelage vorzuspannen, aus der heraus das Gelenk und mit diesem die zugfahrzeugseitige Ausrichtformation längs der Zugfahrzeug-Höhenachse verlagerbar ist, wird eine erheblich größere und deswegen bevorzugte Führungssicherheit erreicht, wenn an jeder Führungseinrichtung das jeweilige Gelenk durch je eine Vorspanneinrichtung aus einer Ruhelage heraus jeweils gegen Vorspannkraft in entgegengesetzte Richtungen längs der Zugfahrzeug-Höhenachse verlagerbar ist.

Das oben zur Relativbeweglichkeit der zugfahrzeugseitigen Ausrichtformation relativ zum zugfahrzeugseitigen Kupplungsbauteil Gesagte gilt auch für die Relativbeweglichkeit des zugfahrzeugseitigen Ausrichtbauteils insgesamt relativ zum zugfahrzeugseitigen Kupplungsbauteil und gilt ebenso für das vom zugfahrzeugseitigen Ausrichtbauteil getragene zugfahrzeugseitige Steckerbauteil. Zwar kann das zugfahrzeugseitige Steckerbauteil relativ zu dem es tragenden Ausrichtbauteil beweglich sein, jedoch handelt es sich gemäß der zuvor diskutierten bevorzugten Weiterbildung der vorliegenden Erfindung dabei um eine Relativbewegung, die einer Relativbewegung des zugfahrzeugseitigen Ausrichtbauteils relativ zum zugfahrzeugseitigen Kupplungsbauteil überlagert ist.

Die Relativbeweglichkeit der zugfahrzeugseitigen Ausrichtformation relativ zum zugfahrzeugseitigen Kupplungsbauteil ist mit der Relativbeweglichkeit des zugfahrzeugseitigen Ausrichtbauteils relativ zu dem es tragenden Kupplungsbauteil identisch, wenn die zugfahrzeugseitige Ausrichtformation relativ zum übrigen zugfahrzeugseitigen Ausrichtbauteil unbeweglich ist, also etwa starr mit einem es aufnehmenden Ausrichtgestell verbunden ist. Es soll jedoch nicht ausgeschlossen sein, dass zur Vermeidung von Beschädigungen der zugfahrzeugseitigen Ausrichtformation etwa bei der Herstellung des Formschlusseingriffs mit der nachlauffahrzeugseitigen Ausrichtformation die zugfahrzeugseitige Ausrichtformation relativ zu einem Ausrichtgestell des übrigen zugfahrzeugseitigen Ausrichtbauteils beweglich an diesem aufgenommen ist.

Wenn außerdem die Rede davon ist, dass das zugfahrzeugseitige Ausrichtbauteil relativ zum zugfahrzeugseitigen Kupplungsbauteil beweglich ist, so schließt dies ausdrücklich den Fall mit ein, dass das zugfahrzeugseitige Ausrichtbauteil relativ zu einer Komponente des zugfahrzeugseitigen Kupplungsbauteils, wie etwa dem Fangmaul, beweglich ist, die selbst wieder relativ zu weiteren Komponenten des zugfahrzeugseitigen Kupplungsbauteils relativ beweglich ist, welche im fertig montierten Zustand betriebs- und bestimmungsgemäß relativ zum Zugfahrzeugrahmen unbeweglich an diesem angebracht sind. Für das vom zugfahrzeugseitigen Ausrichtbauteil getragenen zugfahrzeugseitigen Steckerbauteil gilt das entsprechende, da - wie oben bereits dargelegt - dessen Relativbeweglichkeit relativ zum zugfahrzeugseitigen Ausrichtbauteil der Relativbeweglichkeit des Ausrichtbauteils relativ zum zugfahrzeugseitigen Kupplungsbauteil überlagert ist.

Die vorliegende Erfindung und ihre vorteilhaften Weiterbildungen werden nachfolgend anhand der beiliegenden Zeichnungen näher erläutert. Es stellt dar:
- Figur 1: eine perspektivische Ansicht einer erfindungsgemäßen Kupplungsvorrichtung bei nicht hergestellter Kupplungsverbindung,
- Figur 2: die Kupplungsverbindung von Figur 1 bei Ansicht in Nickachsenrichtung der beteiligten Fahrzeuge,
- Figur 3: die Kupplungsvorrichtung von Figur 2 in derselben Ansicht bei hergestellter Kupplungsverbindung,
- Figur 4: eine Draufsicht der Kupplungsverbindung von Figur 3 bei maximal möglicher Abwinklung von zug- und nachlauffahrzeugseitigem Kupplungsbauteil relativ zueinander,
- Figur 5: eine in teilweiser Schnitt- und teilweiser Explosionsdarstellung gezeigte Rückansicht eines zugfahrzeugseitigen Ausrichtbauteils mit von diesem getragenen zugfahrzeugseitigen Steckerbauteil der Kupplungsvorrichtung der Figuren 1 bis 4,
- Figur 6: eine perspektivische Darstellung, teilweise im Schnitt, das nachlauffahrzeugseitigen Ausrichtbauteils mit von diesem getragenen nachlauffahrzeugseitigen Steckerbauteil,
- Figur 7: eine Schnittdarstellung von zugfahrzeugseitigem Ausricht- und Steckerbauteil sowie von nachlauffahrzeugseitigem Ausricht- und Steckerbauteil gemäß der Figuren 5 bzw. 6 vor Herstellung eines Formschlusseingriffs zwischen den Ausrichtbauteilen,
- Figur 8: die Bauteile von Figur 7 bei Annäherung von zug- und nachlauffahrzeugseitigem Ausrichtbauteil aneinander,
- Figur 9: die Bauteile der Figuren 7 und 8 mit in Formschlusseingriff aneinander festgelegten zug- und nachlauffahrzeugseitigen Ausrichtbauteilen sowie mit zug- und nachlauffahrzeugseitigen Steckerbauteilen in hergestellter Steckerverbindung,
- Figur 10: eine zweite Ausführungsform des nachlauffahrzeugseitigen Kupplungsbauteils in perspektivischer Explosionsansicht und
- Figur 11: eine Längsschnittansicht durch die zweite Ausführungsform des nachlauffahrzeugseitigen Kupplungsbauteils in fertig montiertem Zustand.

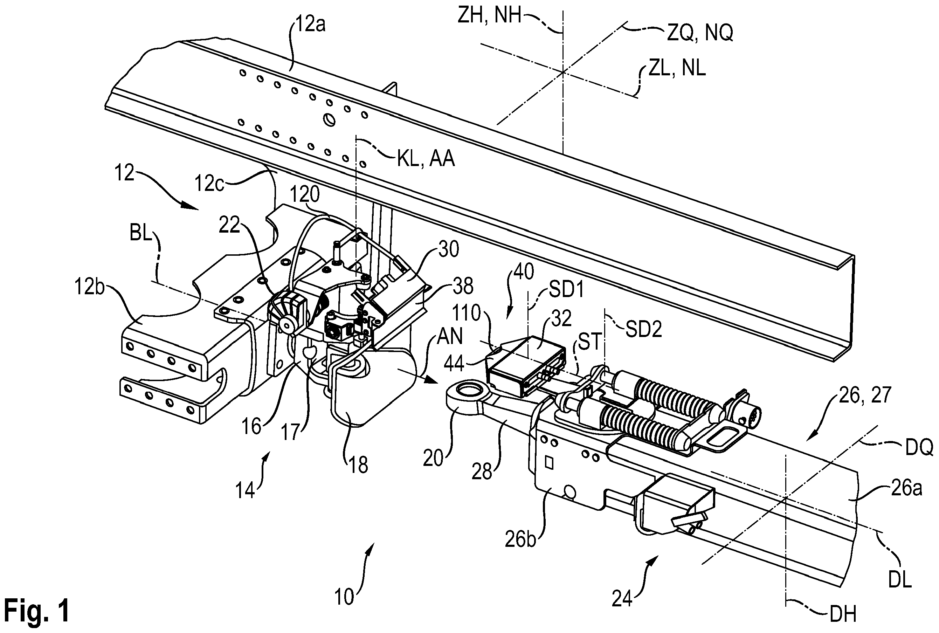

In den Figuren 1 bis 4 ist eine allgemein mit 10 bezeichnete erfindungsgemäße Kupplungsvorrichtung in unterschiedlichen Perspektiven und mit unterschiedlichen Relativstellungen der beteiligten Kupplungsbauteile relativ zueinander dargestellt.

In Figur 1 ist ein Fahrzeugrahmen 12 eines Zugfahrzeugs dargestellt. Dieser umfasst einen längs einer Zugfahrzeug-Längsachse ZL verlaufenden Längsträger 12a und einen orthogonal hierzu in Zugfahrzeug-Querrichtung ZQ verlaufender Zugfahrzeug-Querträger 12b.

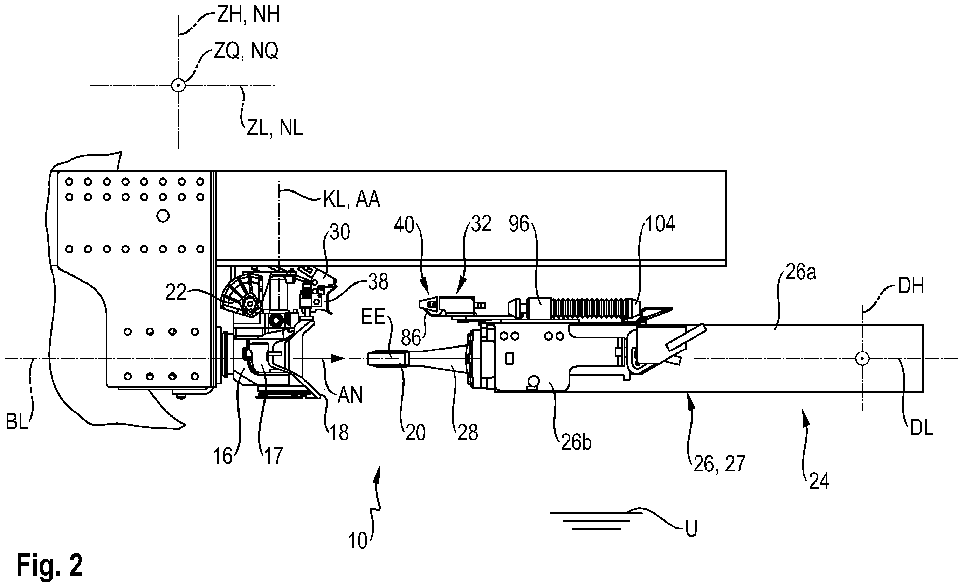

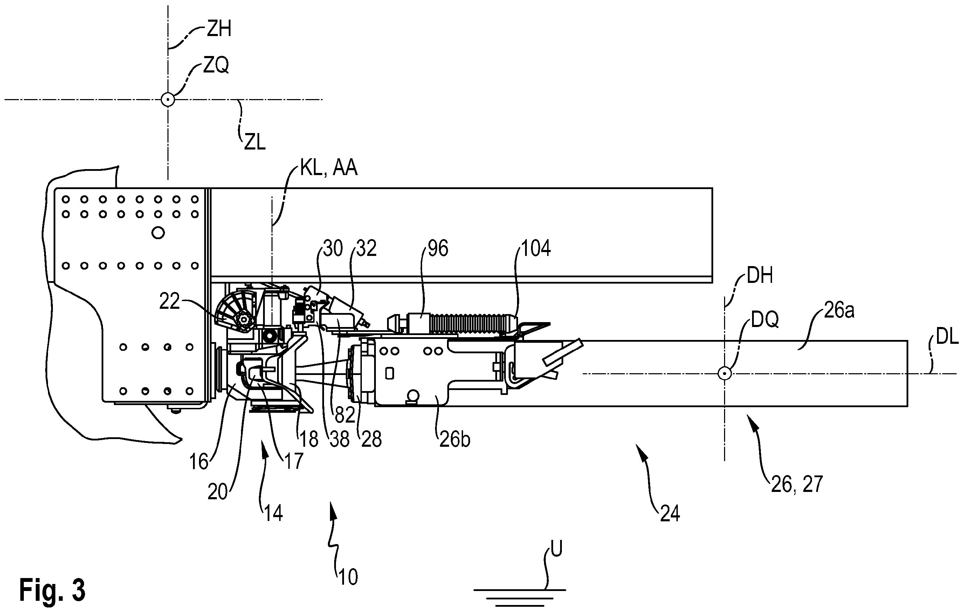

Die Zugfahrzeug-Längsachse ZL und die Zugfahrzeug-Querachse ZQ verlaufen parallel zu einem Aufstandsuntergrund des Zugfahrzeugs. Eine zu beiden genannten Achsen orthogonale Zugfahrzeug-Höhenachse ZH verläuft daher orthogonal zu dem lediglich in den Figuren 2 und 3 schematisch dargestellten Aufstandsuntergrund U. Die Zugfahrzeug-Längsachse ZL ist parallel zur Rollachse des Zugfahrzeugs, die Zugfahrzeug-Querachse ZQ ist parallel zur Nickachse des Zugfahrzeugs und die Zugfahrzeug-Höhenachse ZH ist parallel zur Gierachse des Zugfahrzeugs. In der vorliegenden Anmeldung ist dabei stets der Begriff "Gierachse" synonym gebraucht für eine Fahrzeughöhenachse, der Begriff "Nickachse" synonym für eine Fahrzeugquerachse und der Begriff "Rollachse" für eine Fahrzeuglängsachse.

Der Querträger 12b kann entweder unmittelbar am Längsträger 12a oder, wie in den Figuren dargestellt, über ein Vertikalschild 12c mit dem Längsträger 12a verbunden sein.

Am Zugfahrzeug-Querträger 12b ist in dessen Quermitte das zugfahrzeugseitige Kupplungsbauteil 14 einer in den Figuren 1 bis 4 dargestellten Bolzenkupplung angebracht.

Das zugfahrzeugseitige Kupplungsbauteil 14 umfasst ein Kupplungsgehäuse 16, an welchem ein in Figur 1 nicht dargestellter Kupplungsbolzen als Kupplungsglied längs der Gierachse ZH des Zugfahrzeugs in an sich bekannter Weise beweglich aufgenommen ist. Die gierachsenparallele Längsmittellinie KL des Kupplungsbolzens ist in den Figuren 1 bis 4 dargestellt.

Am Kupplungsgehäuse 16, dessen Zugösen-Aufnahmeraum 17 der Kupplungsbolzen je nach seiner Betriebsstellung unterschiedlich stark durchsetzt, ist ein um die Längsmittelachse KL des Kupplungsbolzens schwenkbares Fangmaul 18 angeordnet, welches in die in den Figuren 1 bis 3 dargestellte Stellung vorgespannt ist. Das Fangmaul 18 erleichtert in an sich bekannter Weise das Einfädeln einer nachlauffahrzeugseitigen Zugöse 20, welche ein nachlauffahrzeugseitiges Kupplungsglied darstellt, in den Zugösen-Aufnahmeraum 17 zur Ineingriffnahme durch den Kupplungsbolzen.

Das zugfahrzeugseitige Kupplungsbauteil 14 weist im dargestellten Beispiel ein Kinetrol 22 auf, welches u. a. als Antriebskraftquelle für eine Bewegung des Kupplungsbolzens wenigstens in die aus dem Zugösen-Aufnahmeraum 17 des Kupplungsgehäuses 16 zurückgezogene Stellung dient. In dieser Stellung ist der Zugösen-Aufnahmeraum 17 des Kupplungsgehäuses 16 für das Einführen oder/und das Herausziehen der Zugöse 20 in den bzw. aus dem Zugösen-Aufnahmeraum 17 frei.

Das Zugfahrzeug, repräsentiert durch seinen Fahrzeugrahmen 12, ist in der in den Figuren 1 und 2 gezeigten Bezugsstellung, in welcher das Zugfahrzeug und das Nachlauffahrzeug, repräsentiert durch das nachlauffahrzeugseitige Kupplungsbauteil 24, sich auf einem gemeinsamen ebenen Untergrund unmittelbar hintereinander mit komplanaren, zum gemeinsamen Untergrund U orthogonalen Fahrzeuglängsmittelebenen angeordnet sind, längs der Zugfahrzeug-Längsachse ZL in einer zum Nachlauffahrzeug hinweisenden Annäherungsrichtung AN an die Zugöse 20 des Nachlauffahrzeugs annäherbar, um die Zugöse 20 zur Herstellung eines Kupplungsverbindungseingriffs mit dem Kupplungsbolzen und damit zur Herstellung einer Kupplungsverbindung zwischen Zug- und Nachlauffahrzeug in den Zugösen-Aufnahmeraum 17 des Kupplungsgehäuses 16 einzuführen.

Das nachlauffahrzeugseitige Kupplungsbauteil 24 weist eine Deichsel 26 mit einem Deichselkörper 27 auf. Der Deichselkörper 27 weist ein einem nicht dargestellten Nachlauffahrzeugkörper näher gelegenen erstes Deichselkörper-Bauteil 26a und ein der Zugöse 20 näher gelegenes zweites Deichselkörper-Bauteil 26b auf. An dem der Zugöse 20 näher gelegenen Längsende des zweiten Deichselkörper-Bauteils 26b ist ein Zugösen-Bauteil 28 fest mit dem Deichselkörper 27 verbunden.

In den Figuren 1 bis 3 verläuft der Deichselkörper 27 und mit ihm das gesamte Nachlauffahrzeug mit einer zur Zugfahrzeug-Längsachse ZL parallelen Nachlauffahrzeug-Längsachse NL. Ebenso ist die Nachlauffahrzeug-Querachse NQ parallel zur Zugfahrzeug-Querachse ZQ. Schließlich ist auch die Nachlauffahrzeug-Höhenachse NH parallel zur Zugfahrzeug-Höhenachse ZH. Dies zeichnet weiter den oben genannten Bezugszustand aus, in dem sich Zugfahrzeug und Nachlauffahrzeug in den Figuren 1 bis 3 befinden. Eine den Deichselkörper 27 zentral durchsetzende Deichselkörper-Längsachse DL ist in dem Bezugszustand kollinear mit einer zur Zugfahrzeug-Längsachse ZL parallelen Längsmittelachse BL durch den Zugösen-Aufnahmeraum 17 im Kupplungsgehäuse 16 des zugfahrzeugseitigen Kupplungsbauteils 14. Dann, wenn der Kupplungsbolzen bei hergestellter Kupplungsverbindung die Zugöse 20 und den Zugösen-Aufnahmeraum 17 des Kupplungsgehäuses 16 durchsetzt, durchsetzt die genannte Längsachse BL auch den Kupplungsbolzen. Ebenso durchsetzt die Deichselkörper-Längsachse DL die Zugöse 20 diametral in ihrer Äquatorebene EE, die im dargestellten Bezugszustand parallel zum Untergrund U orientiert ist. Die Äquatorebene EE der Zugöse 20 ist in Figur 2 orthogonal zur Zeichenebene der Figur 2 orientiert.

Der Vollständigkeit halber sei erwähnt, dass eine Deichselkörper-Höhenachse DH die Deichsel 26 bzw. den Deichselkörper 27 bei untergrundparalleler Ausrichtung der Deichselkörper-Längsachse DL parallel zu den Höhenachsen ZH und NH von Zugfahrzeug und Nachlauffahrzeug durchsetzt. Ebenso ist dann die Deichselkörper-Querachse DQ zur Deichselkörper-Höhenachse DH und zur Deichsellängsachse DL orthogonal.

Dann, wenn bei hergestellter Kupplungsverbindung, wie sie in Figur 3 gezeigt ist, und somit bei hergestelltem Fahrzeugzug, eine relative Nickbewegung zwischen Zug- und Nachlauffahrzeug eintritt, etwa weil ein entsprechend gekrümmter Untergrund überfahren wird, wird die Deichselkörper-Längsachse DL um den Nickwinkel relativ zur Zugfahrzeug-Längsachse ZL verdreht sein. Gleiches gilt für die zur Deichselkörper-Längsachse DL orthogonale Deichselkörperhöhenachse DH.

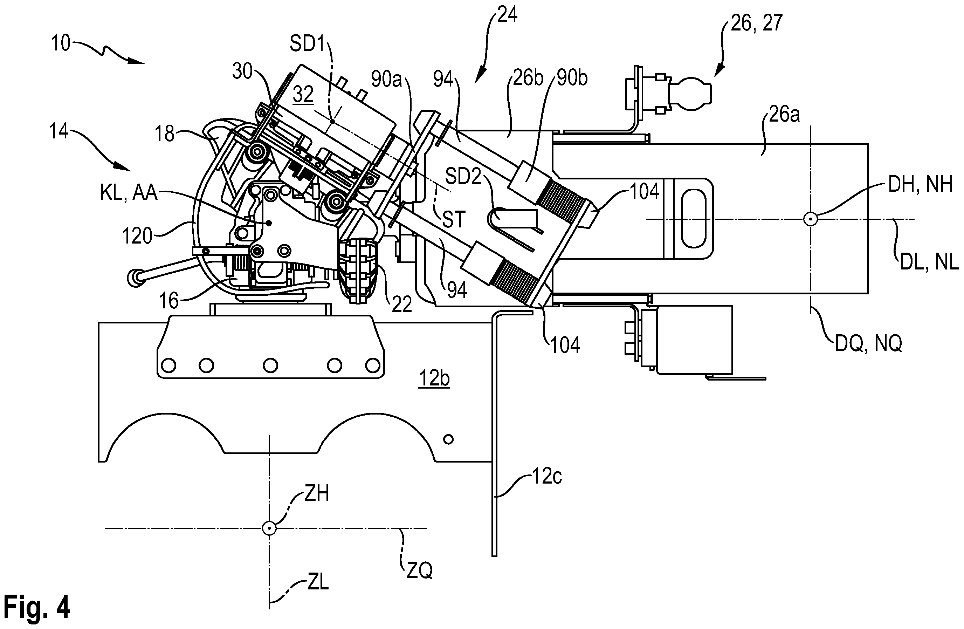

Beim Abbiegen des gebildeten Fahrzeugzuges, wie es in einem Extremfall in Figur 4 gezeigt ist, wird die Deichselkörper-Längsachse DL um eine von der Kupplungslängsachse KL gebildete Abbiegeachse AA des Fahrzeugzuges relativ zur Zugfahrzeug-Längsachse ZL abgewinkelt. Entsprechendes gilt für die zur Deichselkörper-Längsachse DL orthogonale Deichselkörper-Querachse DQ. Die zu den jeweiligen Abwinkel- bzw. Abbiegeachsen parallelen Körperachsen - das sind die Querachsen ZQ und DQ beim Nicken und das sind die Höhenachsen ZH und DH beim Abbiegen - bleiben jeweils zueinander parallel. Die Deichsel 26 sei vorliegend relativ zum übrigen Nachlauffahrzeug unbeweglich angenommen, wenngleich dies nicht so sein muss. Die Deichselkörper-Längsachse DL ist daher parallel zur Nachlauffahrzeug-Längsachse NL, die Deichselkörper-Querachse DQ ist parallel zur Nachlauffahrzeug-Querachse NQ und die Deichselkörperhöhenachse DH ist parallel zur Nachlauffahrzeug-Höhenachse NH.

Die Kupplungsbauteile 14 und 24 sind nicht nur zur Herstellung der Kupplungsverbindung ausgebildet, die die für die Bildung eines Fahrzeugzuges notwendige Übertragbarkeit von Zugkraft vom Zugfahrzeug auf das Nachlauffahrzeug sorgt, sondern sind überdies in äußerst vorteilhafter Weise für eine automatisierte Herstellung einer Energie oder/und Information übertragenden Steckerverbindung zwischen einem zugfahrzeugseitigen Steckerbauteil 30 und einem nachlauffahrzeugseitigen Steckerbauteil 32 ausgebildet. Der Übersichtlichkeit halber sind in den Figuren entsprechende Energie- oder/und übertragende Versorgungsleitungen nicht dargestellt, für die am jeweiligen Fahrzeug aus Zugfahrzeug und Nachlauffahrzeug die Steckerbauteile 30 und 32 eine Schnittstelle bilden.

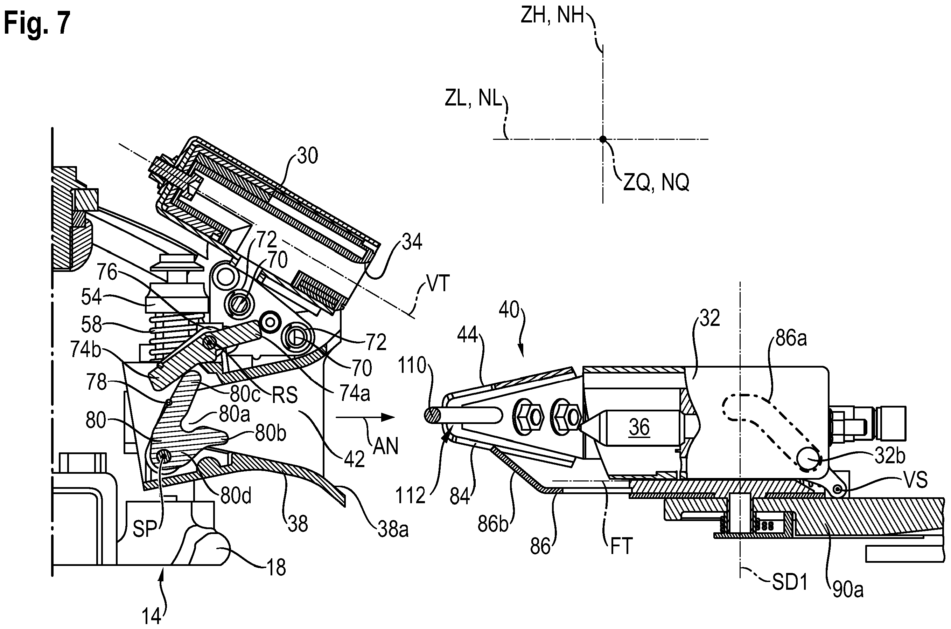

Die eigentliche Übertragung von Energie oder/und Information über die bei hergestellter Steckerverbindung verbundenen Steckerbauteile 30 und 32 erfolgt über die zugfahrzeugseitige Steckerformation 34 und die nachlauffahrzeugseitige Steckerformation 36, welche beide schematisiert in den Figuren 7 bis 9 dargestellt sind. Die Steckerformationen 34 und 36 von Zugfahrzeug und Nachlauffahrzeug kontaktieren sich bei hergestellter Steckerverbindung und bilden somit eine Möglichkeit, Energie in elektrischer oder/und pneumatischer oder/und hydraulischer Form oder/und Information zwischen Zug- und Nachlauffahrzeug zu übertragen.

Eine Steckerformation, im dargestellten Beispiel etwa die zugfahrzeugseitige Steckerformation 34, kann als Buchse ausgebildet sein. Die jeweils andere Steckerformation, hier die nachlauffahrzeugseitige Steckerformation 36, kann als männlicher Stecker ausgebildet sein.

Zur Erleichterung der Herstellung der Steckerverbindung weist das zugfahrzeugseitige Kupplungsbauteil 14 ein zugfahrzeugseitiges Ausrichtbauteil 38 auf und weist das nachlauffahrzeugseitige Kupplungsbauteil 24 ein nachlauffahrzeugseitiges Ausrichtbauteil 40 auf. Die Ausrichtbauteile 38 und 40 sind zur Herstellung eines Formschlusseingriffs miteinander ausgebildet, um die Steckerbauteile 32 und 34 in eine für die Herstellung einer Steckerverbindung vorteilhafte Ausgangssituation zu verbringen, also diese steckerverbindungsvorbereitend auszurichten.

Eines der Ausrichtbauteile, im vorliegenden Beispiel das zugfahrzeugseitige Ausrichtbauteil 38, weist vorteilhafterweise eine Ausrichtausnehmung 42 als Ausrichtformation auf. Das jeweils andere Ausrichtbauteil - hier das nachlauffahrzeugseitige Ausrichtbauteil 40 - weist einen sich zum jeweils anderen Fahrzeug des Fahrzeugzuges hin verjüngenden Vorsprung 44 als Ausrichtformation auf.

Damit die steckerverbindungsvorbereitende Ausrichtung bei kurzem Ausrichtbewegungsweg funktioniert, trägt wenigstens ein Ausrichtbauteil das Steckerbauteil desselben Fahrzeugs derart, dass das Steckerbauteil relativ zu dem es tragenden Ausrichtbauteil beweglich ist. Im vorliegenden Beispiel ist sowohl das zugfahrzeugseitige Steckerbauteil 30 relativ zum zugfahrzeugseitigen Ausrichtbauteil 38 beweglich, wie auch das nachlauffahrzeugseitige Steckerbauteil 32 zum nachlauffahrzeugseitigen Ausrichtbauteil 40 beweglich ist.

Das zugfahrzeugseitige Ausrichtbauteil 38 ist wiederum bevorzugt am Fangmaul 18 des zugfahrzeugseitigen Kupplungsbauteils 14 angeordnet, um dessen Relativbeweglichkeit relativ zum Kupplungsbolzen und zum Kupplungskörper 16 auch für das am zugfahrzeugseitigen Ausrichtbauteil 38 vorgesehene Steckerbauteil 32 nutzen zu können.

In den Figuren 2 und 3 ist zu erkennen, dass das zugfahrzeugseitige Ausrichtbauteil 38 mit seinem Steckerbauteil 30 längs der Zugfahrzeug-Längsachse ZL und zwar bevorzugt in der Annäherungsrichtung AN des Zugfahrzeugs an das Nachlauffahrzeug bei Herstellung der Kupplungsverbindung versetzt angeordnet ist. Damit kann eine längs der Zugfahrzeug-Höhenachse sehr kompakte Anordnung erhalten werden, bei der dennoch das zugfahrzeugseitige Ausrichtbauteil 38 und das zugehörige Steckerbauteil 30 oberhalb der das zugfahrzeugseitige Kupplungsbauteil 14 durchsetzenden Längsmittelachse BL angeordnet werden kann.

Im Stand der Technik sind bei funktionell vergleichbaren Lösungen das zugfahrzeugseitige Ausrichtbauteil oder/und das zugfahrzeugseitige Steckerbauteil mit der Längsmittellinie KL des Kupplungsbolzens fluchtend angeordnet. Bei der erfindungsgemäßen vorteilhaften orthogonal zur verlängert gedachten Längsmittellinie KL des Kupplungsbolzens versetzten Anordnung von zugfahrzeugseitigem Ausrichtbauteil 38 und Steckerbauteil 30 kann eine Bolzenaufnahme 16a des Kupplungsgehäuses 16, in welchem der Kupplungsbolzen dann aufgenommen ist, wenn er aus dem Zugösen-Aufnahmeraum 17 des Kupplungsgehäuses 16 zurückgezogen ist, längs der Zugfahrzeug-Höhenachse ZL mit dem zugfahrzeugseitigen Ausrichtbauteil 38 oder/und dem zugfahrzeugseitigen Steckerbauteil 30 axial überlappend angeordnet werden.

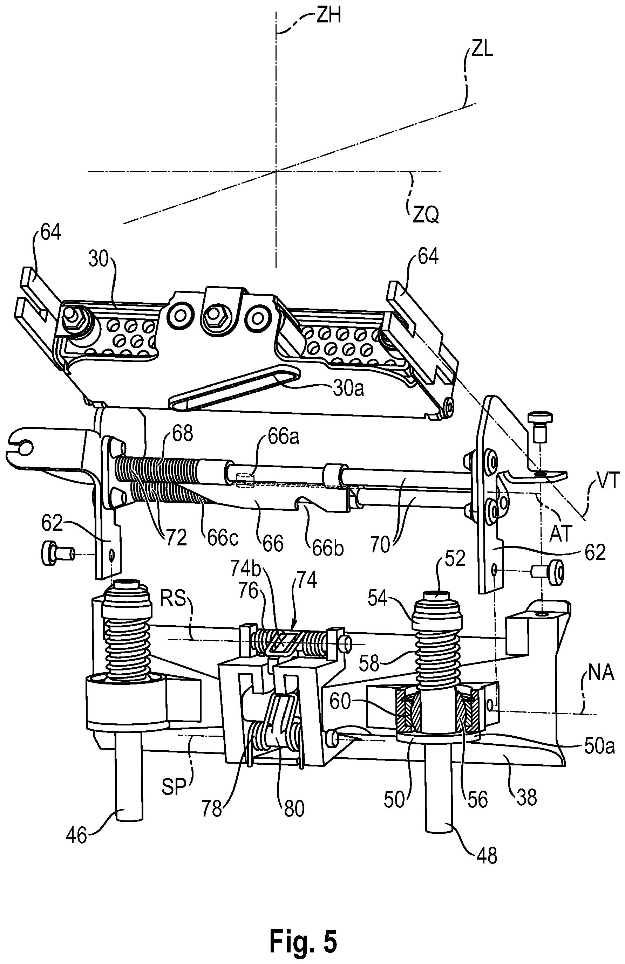

Nachfolgend wird anhand von Figur 5 das zugfahrzeugseitige Ausrichtbauteil 38 mit dem relativ zu diesem beweglich vorgesehenen zugfahrzeugseitigen Steckerbauteil 30 erläutert. Zur Erleichterung der Orientierung sind in Figur 5 die Zugfahrzeug-Höhenachse ZH und die Zugfahrzeug-Querachse ZQ angegeben. Die Zugfahrzeug-Längsachse ZL ist etwas um die Senkrechte zur Zeichenebene der Figur 5 nach links geneigt. Die zugfahrzeugseitige Ausrichtformation 42 weist in Figur 5 vom Betrachter weg.

Das Ausrichtbauteil 38 mit seiner zum Ausrichtvorsprung 44 wenigstens abschnittsweise komplementären Ausrichtausnehmung 42 ist an zwei parallelen und längs der Zugfahrzeug-Höhenachse ZH verlaufenden Führungsstangen 46 und 48 translatorisch beweglich geführt.

Die Führung des zugfahrzeugseitigen Ausrichtbauteils 38 ist an beiden Führungsstangen 46 und 48 im Wesentlichen identisch ausgeführt. Aus Gründen der Übersichtlichkeit wird daher die Führung nur anhand der in Figur 5 rechten Führungsstange 48 erläutert.

An der Führungsstange 48 ist ein Führungstopf 50 längs der Führungsstange 48 längs der Zugfahrzeug-Höhenachse ZH beweglich geführt, wobei der Führungstopf 50 von einer im Inneren des Topfes 50 vorhandenen und damit in Figur 5 nicht sichtbaren inneren Schraubendruckfeder in seine fangmaulferne Endstellung vorgespannt ist.

Fest mit der Führungsstange 48 an deren fangmaulfernem Längsende verbunden ist eine endseitige Abschlussschraube 52, an welcher ein zur gemeinsamen Bewegung mit dem Führungstopf 50 verbundener Dom 54 aufgrund der Vorspannung der radial inneren Schraubendruckfeder anliegt. Der Führungstopf 50 kann sich daher ausgehend von seiner in Figur 5 gezeigten Ruhestellung längs der Führungsstange 48 nur nach unten, also zum Fangmaul 18 hin bewegen. Am Führungstopf 50 radial außen ist eine Gelenkkugel 56 beweglich geführt, welche durch eine zweite, äußere Schraubendruckfeder 58, die koaxial und überlappend mit der inneren Schraubendruckfeder im Inneren des Führungstopfes angeordnet ist, gegen einen nach radial außen vorstehenden umlaufenden Radialvorsprung 50a des Führungstopfes 50 vorgespannt ist. Relativ zum Führungstopf 50 kann sich die Gelenkkugel 56 in der in Fig. 5 gezeigten Stellung gegen die Vorspannkraft der zwischen Gelenkkugel 56 und Dom 54 abgestützten äußeren Schraubendruckfeder 58 vom Radialvorsprung 50a weg nur nach oben zum Dom 54 hin bewegen.

Somit ist das Ausrichtbauteil 38 an den Führungsstangen 46 und 48 in eine in Figur 5 dargestellte Ruhelage vorgespannt, aus der heraus das Ausrichtbauteil 38 in beide entgegengesetzten Richtungen längs der Führungsstangen 46 und 48 (längs der Zugfahrzeug-Höhenachse ZH) auslenkbar ist. Am Ausrichtbauteil 38 ist jede Gelenckugel 56 in einer negativ-kugelkalottenförmigen Gleitschale 60 geführt, sodass das Ausrichtbauteil 38 nicht nur längs der Zugfahrzeug-Höhenachse ZH verlagerbar, sondern auch um eine zur Nickachse ZQ des Zugfahrzeugs parallele Nick-Ausrichtachse NA relativ zu den Führungsstangen 46 und 48 verschwenkbar ist.

Die Anordnung von zwei parallelen Führungsstangen 46 und 48 erfolgt aus Gründen bestmöglicher Bauraumausnutzung, sodass zwischen den Führungsstangen 46 und 48 ein nachfolgend im Zusammenhang mit den Figuren 7 bis 9 näher beschriebener Verriegelungsmechanismus zur Verriegelung der Ausrichtbauteile 38 und 40 aneinander aufgenommen sein kann.

Im vorliegenden Beispiel ist am Ausrichtbauteil 38 mit Schrauben ein Tragbauteil 62 befestigt, welches vom Ausrichtbauteil 38 im dargestellten Beispiel in Richtung der Zugfahrzeug-Gierachse ZH vom Fangmaul 18 weg absteht. Die Verbindung des Tragbauteils 62 mit dem Ausrichtbauteil 38 kann zusätzlich oder alternativ auch mit anderen Verbindungsmitteln als mit Schrauben hergestellt sein.

Am Tragbauteil 62 ist das zugfahrzeugseitige Steckerbauteil 30 längs einer Verbindungstrajektorie VT zwischen zwei unterschiedlichen Stellungen beweglich, nämlich zwischen einer näher bei den verlängert gedachten Längsmittelachsen der Führungsstangen 46 und 48 gelegenen zurückgezogenen Verbindungsbereitschaftsstellung und einer längs der Verbindungstrajektorie VT zum Nachlauffahrzeug hin versetzten Verbindungsaktivierungsstellung. Hierzu können am Steckerbauteil 30 oder/und am Tragbauteil 62 Führungsmittel 64 vorgesehen sein (in Figur 5 sind Führungsmittel 64 nur am zugfahrzeugseitigen Steckerbauteil 30 dargestellt).

Üblicherweise ist das zugfahrzeugseitige Steckerbauteil 30 derart am zugfahrzeugseitigen Kupplungsbauteil 14 angeordnet, dass die das Steckerbauteil 30 in seiner Quermitte durchsetzende Verbindungstrajektorie VT mit einer den Zugösen-Aufnahmeraum 17 bzw. den Kupplungsbolzen in seiner eine Zugöse durchsetzenden Stellung zentral durchsetzende Längsmittellinie BL in einer orthogonal zum Aufstandsuntergrund U des Zugfahrzeugs gelegenen Fahrzeuglängsmittelebene des Zugfahrzeugs gelegen sind und einen Winkel zwischen sich einschließen. Der Schnittpunkt der verlängert gedachten Verbindungstrajektorie VT mit der den Kupplungsbolzen durchsetzenden Längsmittellinie BL ist bevorzugt ausgehend vom Kupplungsbolzen zum Nachlauffahrzeug hin versetzt, was die vorteilhafte Anordnung des zugfahrzeugseitigen Steckerbauteils 30 längs der Zugfahrzeug-Höhenachse ZH über dem Fangmaul 18 ermöglicht.

Als Bewegungsantrieb zur Verlagerung des zugfahrzeugseitigen Steckerbauteils 30 zwischen den genannten Stellungen: Verbindungsbereitschaftsstellung und Verbindungsaktivierungsstellung, sind am bevorzugt mehrteilig ausgeführten Tragbauteil 62 ein Antriebsbauteil 66 und ein Kraftgerät 68 vorgesehen. Hierzu sind genauer zwei parallele Führungsschienen in Form von Führungsstangen 70 das Tragbauteil 62 längs der Zugfahrzeug-Querachse ZQ überspannend angeordnet, an welchem das Antriebsbauteil 66 längs einer zur Zugfahrzeug-Querachse ZQ parallelen Antriebstrajektorie AT beweglich geführt aufgenommen ist. Das Kraftgerät 68 umfasst bevorzugt Schraubendruckfedern 72, bevorzugt an jeder Antriebsführungsstange 70 je eine. Die Schraubendruckfedern 72, die keine äußere Energieversorgung benötigen, sind zwischen einem Querende längs der Zugfahrzeug-Querachse ZQ und dem diesem Ende näher gelegenen Ende des Antriebsbauteils 66 angeordnet.

Das Antriebsbauteil 66 kann mit dem zugfahrzeugseitigen Steckerbauteil 30 über eine mechanische Steuerung gekoppelt sein, sodass beispielsweise am Antriebsbauteil 66 ein von diesem abstehender Vorsprung 66a vorgesehen sein kann, welcher in eine Kulisse 30a am Steckerbauteil 30 eingreift. In Figur 5 ist das Antriebsbauteil 66 in seiner Anfangsstellung als eine seiner möglichen Endstellungen gezeigt, in welcher die Schraubendruckfedern 72 ihr betriebsmäßig größtes Maß an potenzieller Energie aufweisen. Dann, wenn sich das Antriebsbauteil 66 in dieser Anfangsstellung befindet, befindet sich das zugfahrzeugseitige Steckerbauteil 30 aufgrund des formschlüssigen Eingriffs von Nocken 66a und Kulisse 30a in seiner Verbindungsbereitschaftsstellung.

Ein im dargestellten Beispiel zweiarmiger Riegel 74 greift mit seinem in Figur 5 nicht erkennbaren Verriegelungsschenkel 74a (s. Fig. 7 bis 9) in eine Verriegelungsausnehmung 66b am Antriebsbauteil 66 und sichert dieses so gegen eine Verlagerung in die längs der Antriebstrajektorie in Figur 5 nach rechts versetzte Endstellung (nicht dargestellt).

Durch eine Feder 76, welche am Betätigungsschenkel 74b des Riegels 74 angreift, ist der Riegel 74 in seine Verriegelungsstellung vorgespannt, in welcher sein Verriegelungsschenkel 74a in die Verriegelungsausnehmung 66b selbsttätig einrückt, sobald diese sich über dem Verriegelungsschenkel 74a befindet.

Eine weitere Feder 78 auf der von der Ausrichtausnehmung 42 wegweisenden Seite des Ausrichtbauteils 38 spannt einen Sperrhaken 80, auf den weiter unten noch näher eingegangen wird, in seine Einführstellung vor, in der er in Figur 7 zu sehen ist. Der Riegel 74 ist ebenso um eine parallel zur Zugfahrzeug-Querachse ZQ verlaufende Riegelschwenkachse RS schwenkbar, wie der Sperrhaken 80 um eine zur Zugfahrzeug-Querrichtung ZQ parallele Sperrhakenschwenkachse SP schwenkbar ist.

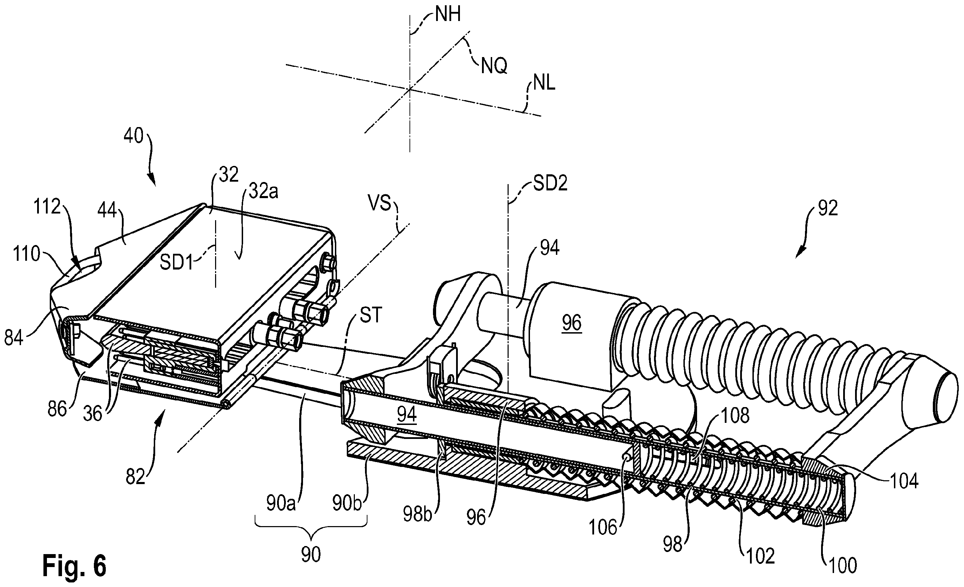

Anhand der Figur 6 unter weiterer Einbeziehung der Figuren 4 und 7 wird nachfolgend der konstruktive Aufbau des im Beispiel nachlauffahrzeugseitigen Ausrichtbauteils 40 mit dem von diesem getragenen nachlauffahrzeugseitigen Steckerbauteil 32 beschrieben werden.

Das nachlauffahrzeugseitige Steckerbauteil 32 ist an einem Aufnahmebauteil 82 um eine Verstauungsschwenkachse VS schwenkbar aufgenommen. Die Verstauungsschwenkachse VS ist in der in Figur 6 gezeigten von äußeren Kräften freien Stellung parallel zur Nachlauffahrzeug-Querachse NQ. Sie bleibt unabhängig von den möglichen Relativbewegungen des Steckerbauteils 32 und des Aufnahmebauteils 82 relativ zur Deichsel 26 parallel zum Untergrund, auf welchem das Nachlauffahrzeug aufsteht.

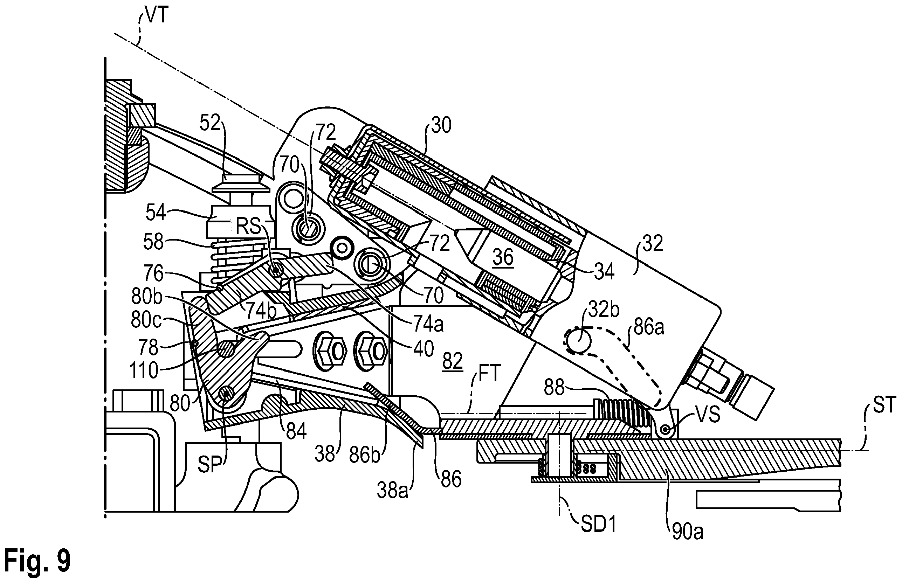

Das Steckerbauteil 32 ist um die Verstauungsschwenkachse VS schwenkbar zwischen einer in Figur 6 gezeigten Verstauungsstellung, in welcher die Steckerformation 36 des nachlauffahrzeugseitigen Steckerbauteils hinter einem die nachlauffahrzeugseitige Ausrichtformation 44 aufweisenden Verdeckungsbauteil 84 verborgen und nicht zur Herstellung einer Steckerverbindung zugänglich ist, und einer in Figur 9 gezeigten vom Untergrund weg verschwenkten Verbindungserwartungsstellung. Das Aufnahmebauteil 82 hat die Form eines Teilgehäuses, welches das Steckerbauteil 32 von wenigstens drei Seiten umgibt, nämlich von unten und zu beiden Seiten. Eine Wandung 32a des Steckerbauteils, welche in der Verstauungsstellung vom Aufstandsuntergrund des Nachlauffahrzeugs wegweist, komplettiert das Aufnahmebauteil 82 zusammen mit dem Verdeckungsbauteil 84 zu einem - abgesehen von Spaltfugen an den Bauteilgrenzen - kompakten Gehäuse.

Ein Führungsbauteil 86 ist im dargestellten Beispiel längs der Nachlauffahrzeug-Höhenachse NH zwischen dem nachlauffahrzeugseitigen Steckerbauteil 32 und dem Aufnahmebauteil 82 angeordnet und ist am Aufnahmebauteil 82 zur Bewegung ausschließlich längs einer zur Nachlauffahrzeug-Längsachse NL parallelen Führungstrajektorie FT beweglich geführt. Das Führungsbauteil 86 kann mit dem nachlauffahrzeugseitigen Steckerbauteil 32 über eine mechanische Steuerung zur Bewegungs- und Kraftübertragung gekoppelt sein, etwa indem das Führungsbauteil 86 eine Führungskulisse 86a aufweist (siehe Figuren 7 bis 9), in welche ein längs der Nachlauffahrzeug-Querachse NQ vom Steckerbauteil 32 abstehender Nocken 32b eingreift. Auf diese Weise kann durch eine Verlagerung des Führungsbauteils 86 längs der Nachlauffahrzeug-Längsachse NL das nachlauffahrzeugseitige Steckerbauteil 32 zwischen seiner Verstauungsstellung der Figuren 6 und 7 in die Verbindungserwartungsstellung von Figur 9 verstellt werden. Durch eine Schraubendruckfeder 88 kann das Führungsbauteil in seine in Figur 7 gezeigte Startstellung vorgespannt sein, wodurch aufgrund der oben geschilderten mechanischen Kopplung mittelbar das Steckerbauteil 23 in die Verstauungsstellung vorgespant ist.

In Figur 9 befindet sich das Führungsbauteil 86 dagegen in seiner Finalstellung, in welcher sich das nachlauffahrzeugseitige Steckerbauteil 32 in der Verbindungserwartungsstellung befindet.

Das Aufnahmebauteil 82 ist zusammen mit dem Verdeckungsbauteil 84, dem nachlauffahrzeugseitigen Steckerbauteil 32 und dem Führungsbauteil 36 an einem Supportbauteil 90 aufgenommen, welches im dargestellten Beispiel vorteilhaft zweiteilig ausgebildet ist und einen ersten Abschnitt 90a aufweist, welcher an einem zweiten Abschnitt 90b translatorisch relativ zu diesem beweglich geführt vorgesehen ist.

Das nachlauffahrzeugseitige Steckerbauteil 32 ist relativ zum Supportbauteil 90, insbesondere relativ zu dessen erstem Abschnitt 90a um eine erste zur Nachlauffahrzeug-Gierachse NH parallele Steckerdrehachse SD1 rotierbar. Diese Relativbeweglichkeit ist gleichzeitig eine Relativbeweglichkeit des nachlauffahrzeugseitigen Steckerbauteils 32 relativ zur Deichsel 26.

Das Supportbauteil 90, insbesondere dessen zweiter Abschnitt 90b, ist relativ zu der ihn aufnehmenden Deichsel 26 um eine ebenfalls zur Nachlauffahrzeug-Gierachse NH parallele zweite Steckerdrehachse SD2 rotierbar. Somit ist das nachlauffahrzeugseitige Steckerbauteil 32 relativ zur Deichsel 26 um zwei zueinander parallele und parallel zur Deichselkörperhöhenachse DH verlaufende Steckerdrehachsen SD1 und SD2 rotierbar.

Weiterhin ist das nachlauffahrzeugseitige Steckerbauteil 32 relativ zur Deichsel 26 um eine zu den Steckerdrehachsen SD1 und SD2 orthogonale Trajektorie ST translatorisch verlagerbar. Die Trajektorie ST der translatorischen Verlagerbarkeit des nachlauffahrzeugseitigen Steckerbauteils relativ zur Deichsel schwenkt im dargestellten Beispiel um die zweite Steckerdrehachse SD2 mit dem zweiten Abschnitt 90b des Supportbauteils 90 mit.

Die translatorische Verlagerbarkeit des ersten Abschnitts 90a des Supportbauteils 90 und damit des nachlauffahrzeugseitigen Steckerbauteils 32 relativ zum zweiten Abschnitt 90b des Supportbauteils 90 ist durch eine Führungs- und Rückstelleinrichtung 92 realisiert, welche bis auf die Verwendung eines Kugelgelenks der translatorischen Bewegungsführung des Ausrichtbauteils 38 relativ zum Fangmaul 18 entspricht, wie es in Figur 5 dargestellt und beschrieben ist.

Zwei zur gemeinsamen Bewegung mit dem ersten Abschnitt 90a des Supportbauteils 90 verbundene, parallele und in Richtung der Trajektorie ST verlaufende, im Wesentlichen identische Führungsstangen 94 sind am zweiten Abschnitt 90b des Supportbauteils 90 jeweils in einem Lagerabschnitt 96 längs der Trajektorie ST beweglich geführt. Ein topfförmiges Aufsatzbauteil 98 mit einem an dem dem Steckerbauteil 32a zugewandten Längsende vorgesehenen Radialvorsprung 98b umgibt einen Längsendabschnitt einer jeden Führungsstange 94, wobei jede Führungsstange 94 und das an ihr angeordnete Aufsatzbauteil 98 relativ zueinander längs der Trajektorie ST beweglich sind. Eine im Inneren des Aufsatzbauteils 98 zwischen dessen Längsende und dem dem Steckerbauteil 32 fernen Längsende der Führungsstange 94 aufgenommene innere Schraubendruckfeder 100 spannt die Führungsstange 94 und das Aufsatzbauteil 98 relativ zueinander im Sinne einer Ausziehbewegung der Führungsstange 94 aus dem Aufsatzbauteil 98 heraus.

Eine das Aufsatzbauteil radial außen umgebende äußere Schraubendruckfeder 102, welche einenends an einem Dom 104 welcher ortsfest am steckerbauteilfernen Längsende des Aufsatzbauteils 98 angeordnet ist, abgestützt ist und andernends am Lagerabschnitt 96 des zweiten Abschnitts 90b des Supportbauteils 90 abgestützt ist, spannt das Aufsatzbauteil 98 relativ zum zweiten Abschnitt 90b des Supportbauteils 90 im Sinne einer Bewegung des endseitigen Doms 104 vom Lagerabschnitt 96 weg. Ein zur gemeinsamen Bewegung mit der Führungsstange 94 vorgesehener Vorsprung, beispielsweise realisiert durch einen die Führungsstange 94 diametral durchsetzenden Stift 106, welcher in ein Langloch 108 am Aufsatzbauteil 98 eingreift, begrenzt die Relativbeweglichkeit von Führungsstange 94 und Aufsatzbauteil 98 relativ zueinander. Das Langloch 108 verläuft dabei in Richtung der Trajektorie ST, also in Richtung der Relativbeweglichkeit von Führungsstange 94 und Aufsatzbauteil 98.

Die innere und die äußere Schraubendruckfeder 100 bzw. 102 definieren so eine Ruhelage des ersten Abschnitts 90a relativ zum zweiten Abschnitt 90b des Supportbauteils 90, aus welcher heraus der erste Abschnitt 90a relativ zum zweiten Abschnitt 90b in beide entgegengesetzte Richtungen längs der Trajektorie ST auslenkbar ist. Einmal unter Kompression der äußeren Feder 102 ist das Steckerbauteil 32 zum Zugfahrzeug hin beweglich und ein andermal unter Kompression der inneren Feder 100 ist das Steckerbauteil 32 längs der Trajektorie ST vom Zugfahrzeug weg beweglich. Die beschriebene Vorspann- und Rückstellbaugruppe, umfassend Führungsstange 94, Aufsatzbauteil 98, Federn 100 und 102 und Dom 104 ist für beide Führungsstangen gleich aufgebaut.

Aufgrund dieser Relativbeweglichkeit des nachlauffahrzeugseitigen Steckerbauteils 32 relativ zur Deichsel rotatorisch um die beiden Steckerdrehachsen SD1 und SD2 und translatorisch längs der Trajektorie ST kann die Steckerverbindung der Steckerbauteile 30 und 32 miteinander an einem beliebigen Ort realisiert sein, unabhängig von der Lage der mit der Längsmittelachse KL des Kupplungsbolzens zusammenfallenden Abbiegeachse AA. Somit kann das zugfahrzeugseitige Steckerbauteil 30 in der zuvor beschriebenen Weise orthogonal zur Abbiegeachse AA versetzt am Fangmaul 18 angeordnet sein.

Nachfolgend wird mit Bezugnahme auf die Figuren 7 bis 9 die Herstellung eines Formschlusseingriffs zwischen den Ausrichtbauteilen 38 und 40 sowie eine Festlegung derselben aneinander nach Herstellung des Formschlusseingriffs beschrieben.

In Figur 7 ist eine Situation beschrieben, wie sie während einer Annäherung des Zugfahrzeugs an das Nachlauffahrzeug in Annäherungsrichtung AN zur Herstellung einer Kupplungsverbindung mit automatisiert hergestellter Steckerverbindung besteht. Die Ausrichtbauteile 38 und 40 von Zugfahrzeug bzw. Nachlauffahrzeug sind in Längsrichtung der beiden Fahrzeuge voneinander entfernt. Aufgrund der Relativbewegung des Zugfahrzeugs relativ zum Nachlauffahrzeug nähert sich das zugfahrzeugseitige Ausrichtbauteil 38 in Richtung AN an das nachlauffahrzeugseitige Ausrichtbauteil 40 an.

Am nachlauffahrzeugseitigen Ausrichtbauteil 40 ist an dem bei Herstellung einer Kupplungsverbindung dem Zugfahrzeug zugewandten Längsende ein Sperrbügel 110 vorgesehen, welcher eine Ausnehmung 112 in der nachlauffahrzeugseitigen Ausrichtformation 44 in Nachlauffahrzeug-Querrichtung NQ überspannt.

Am Grund der zugfahrzeugseitigen Ausrichtformation 42 befindet sich der Sperrhaken 80 in der Einführstellung, in welcher der Sperrbügel 110 in ein Hakenmaul 80a des Sperrhakens 80 einführbar ist. Das Hakenmaul 80a ist zu seinen beiden Seiten beschränkt durch einen Hakenschenkel 80b und durch einen Auslöseschenkel 80c, welche über eine Hakenbasis 80d verbunden sind, die im dargestellten Beispiel durch die Schwenkachse SP des Sperrhakens 80 durchsetzt ist.

Der Hakenschenkel 80b kragt von der Hakenbasis 80d weg weniger stark aus als der Auslöseschenkel 80c, welcher an dem Betätigungsschenkel 74b des durch die Feder 76 in seine Verriegelungsstellung vorgespannten Riegels 74 anliegt.

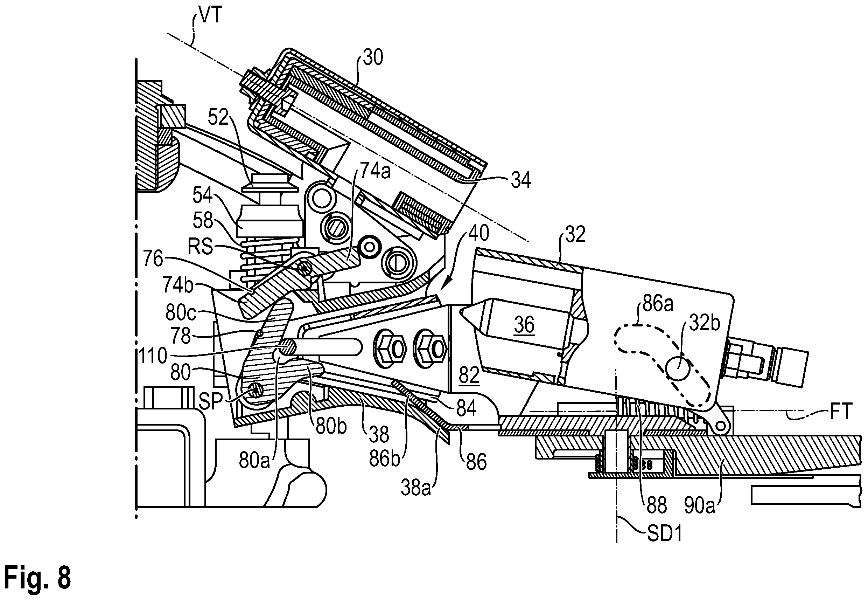

In Figur 8 ist die Annäherung des Zugfahrzeugs und damit des zugfahrzeugseitigen Kupplungsbauteils 14 an das nachlauffahrzeugseitige Kupplungsbauteil 24 soweit fortgeschritten, dass der Sperrbügel 110 am Auslöseschenkel 80c anliegt.

Ebenso liegt ein Anlageabschnitt 86b des Führungsbauteils 86 an einem Gegenanlageabschnitt 38a des zugfahrzeugseitigen Ausrichtbauteils 38 an. Der Gegenanlageabschnitt wird im dargestellten Beispiel gebildet durch eine untere Einführschräge der zugfahrzeugseitigen Ausrichtformation 42. Der Anlageeingriff des Anlageabschnitts 86b am Gegenanlageabschnitt 36a wurde bereits zu einem früheren Zeitpunkt hergestellt, als das zug- und nachlauffahrzeugseitige Kupplungsbauteil 14 bzw. 24 zwar stärker als in Figur 7, aber weniger stark als in Figur 8 gezeigt, einander angenähert waren. Durch die nach Herstellung des Anlageeingriffs des Führungsbauteils 86 mit dem zugfahrzeugseitigen Ausrichtbauteil 38 fortgesetzte Annäherungsbewegung von zug- und nachlauffahrzeugseitigen Kupplungsbauteil 14 bzw. 24 aneinander wurde das Führungsbauteil 86 relativ zum Aufnahmebauteil 82 und somit auch relativ zum nachlauffahrzeugseitigen Steckerbauteil 32 längs der Nachlauffahrzeug-Längsachse NL bewegt, sodass weiter aufgrund des Formschlusseingriffs des Nockens 32b mit der Kulisse 86a in den Seitenschenkeln des Führungsbauteils 86 eine Schwenkbewegung des Steckerbauteils 32 von der Verstauungsstellung der Figur 7 in Richtung zur Verbindungserwartungsstellung von Figur 9 begonnen hat.

Durch die in Figur 8 dargestellte Anlage des Sperrbügels 110 am Auslöseschenkel 80c des Sperrhakens 80 wird bei fortgesetzter Annäherung von zug- und nachlauffahrzeugseitigen Kupplungsbauteil 14 bzw. 24 aneinander der Sperrhaken 80 durch den Sperrbügel 10 in seine in Figur 9 gezeigte Sperrstellung verstellt. Dabei streicht die Spitze des Auslöseschenkels 80c entlang des Betätigungsschenkels 74b des Riegels 74 und verstellt den Riegel 74 in die Freigabestellung, in welcher der Verriegelungsschenkel 74a außer Eingriff mit der Verriegelungsausnehmung 66b des Antriebsbauteils 66 gelangt, sodass das Antriebsbauteil 66 getrieben von den Schraubendruckfedern 72 von seiner Startstellung in die Endstellung verlagert wird. Dadurch wird das zugfahrzeugseitige Steckerbauteil 30 längs der Verbindungstrajektorie von der in den Figuren 7 und 8 gezeigten Verbindungsbereitschaftsstellung in die in Figur 9 gezeigte Verbindungsaktivierungsstellung verstellt.

In der in Figur 9 gezeigten Sperrstellung des Sperrhakens 80 hat der Auslöseschenkel 80c den Betätigungsschenkel 74b des Riegels 74 vollständig überstrichen, sodass ein Längsende des Betätigungsschenkels 74b aufgrund der Vorspannung des Riegels 74 in dessen Verriegelungsstellung in Anlage an eine zum Nachlauffahrzeug hinweisende Flanke des Auslöseschenkels 80c gelangt und somit den Sperrhaken 80 in seiner Sperrstellung gegen eine Verlagerung aus dieser heraus in Richtung zur Einführstellung hin sperrt.

Weiterhin ist in der in Figur 9 gezeigten Stellung die Ausnehmung 112 durch den Hakenschenkel 80b durchsetzt, sodass der in der Sperrstellung des Sperrhakens 80 im Hakenmaul 80 aufgenommene Sperrbügel 110 vom Hakenschenkel 80b hintergriffen ist. Die Ausrichtbauteile 38 und 40 sind somit aneinander festgelegt und gegen ein Lösen ihres Formschlusseingriffs gesichert.

In der in Figur 9 gezeigten Stellung hat das Führungsbauteil 86 seine Finalstellung erreicht, sodass sich das nachlauffahrzeugseitige Steckerbauteil 32 in der Verbindungserwartungsstellung befindet, in welcher eine Steckerverbindung mit dem zugfahrzeugseitigen Steckerbauteil 30 durch dessen Verlagerung längs der Verbindungstrajektorie VT in die Verbindungsaktivierungsstellung einfach herstellbar ist.

Gemäß einer bevorzugten Weiterbildung der vorliegenden Erfindung werden die Steckerbauteile 30 und 32 bei hergestellter Steckerverbindung nicht gesondert aneinander positionsgesichert, insbesondere nicht aneinander verrastet und dgl. Die Steckerbauteile 30 und 32 werden schlicht einander angenähert und die jeweiligen Steckerformationen in Kontakteingriff gebracht, gegebenenfalls ineinander verschoben.

Die in Figur 9 gezeigte Relativstellung von zug- und nachlauffahrzeugseitigem Kupplungsbauteil 14 bzw. 24, in welcher der Formschlusseingriff der Ausrichtbauteile 38 und 40 gegen Trennung des Formschlusseingriffs gesichert ist, wird gemäß einer bevorzugten Weiterbildung der vorliegenden Erfindung wie folgt aufgehoben:
Wie insbesondere in Figur 4 zu erkennen ist, ist das zur Bewegung des Kupplungsbolzens aus der Zugöse 20 heraus vorgesehene Kinetrol 22 über einen Bowdenzug 120 auch mit dem Antriebsbauteil 66 verbunden. Dann, wenn das Kinetrol 22 den Kupplungsbolzen aus einer Stellung, in welcher er die Zugöse 20 des Nachlauffahrzeugbauteils durchsetzt, zur Freigabe derselben anhebt, wird auch das Antriebsbauteil 66 unter Spannung der Schraubendruckfedern 72 zurück in seine Startstellung verstellt. Eine Anlaufschräge 66c des Antriebsbauteils 66 drückt bei dieser Rückstellbewegung, bei welcher aufgrund der Zwangsführung durch den Nocken 66a und die Kulisse 30a auch das zugfahrzeugseitige Steckerbauteil 30 zurück in die Verbindungsbereitschaftsstellung verstellt wird, auf den Verriegelungsschenkel 74a des Riegels 74 und drückt diesen nach unten, sodass sich der Betätigungsschenkel 74b desselben Riegels 74 hebt. Bei dieser Hebebewegung wird der Auslöseschenkel 80c des Sperrhakens 80 freigegeben, sodass sich diese, getrieben durch die Vorspannkraft der Feder 78 zurück in Richtung Einführstellung bewegt bzw. bewegen kann. Somit kann das nachlauffahrzeugseitige Ausrichtbauteil 40 aus dem Formschlusseingriff mit dem zugfahrzeugseitigen Ausrichtbauteil 38 heraus bewegt werden und zwar in Richtung der Annäherungsbewegung AN. Bei dieser Bewegung unterstützt der dann gegen den Hakenschenkel 80b drückende Sperrbügel 110 eine Verstellung des Sperrhakens 80 zurück in die Einführstellung. Die Kupplungsbauteile 14 und 24 und können dann ohne Weiteres voneinander getrennt werden, da zwischen ihren Bauteilen keinerlei Sperr- oder Verriegelungseingriff mehr besteht.

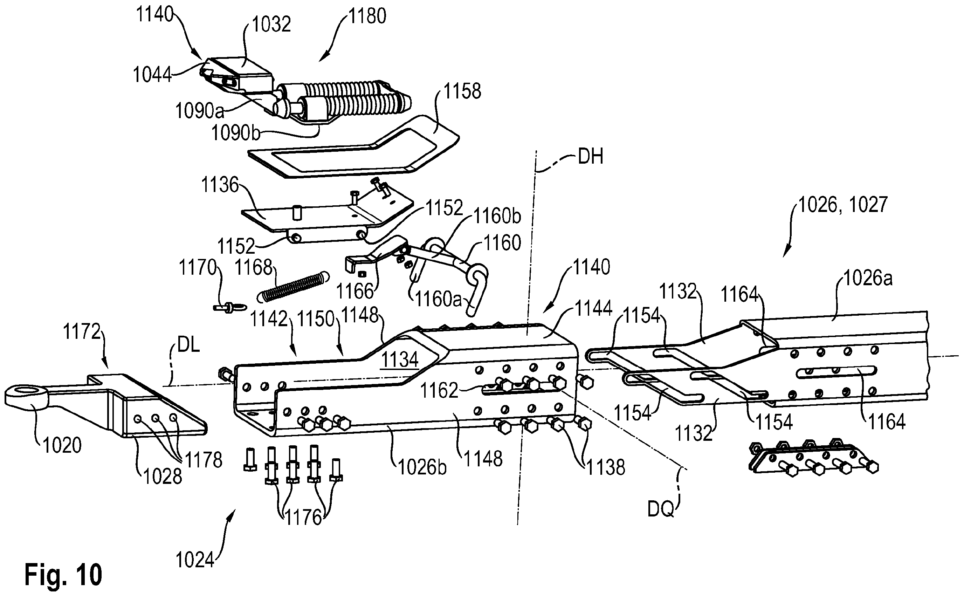

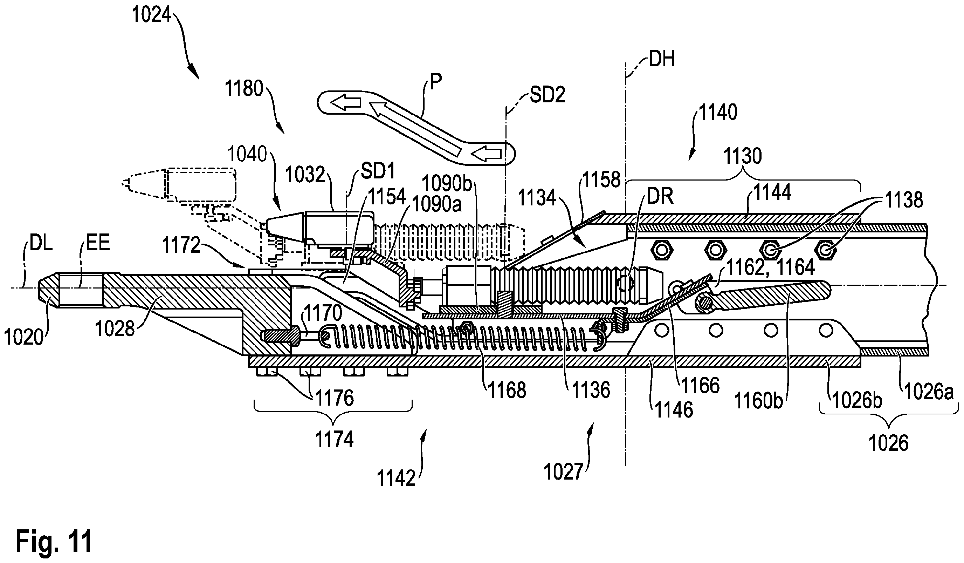

In den Figuren 10 und 11 ist eine besonders vorteilhafte Deichsel 1026 des Nachlauffahrzeugs dargestellt. Gleiche und funktionsgleiche Bauteile bzw. Bauteilabschnitte wie an der Deichsel 26 der Figuren 1 bis 9 sind in den Figuren 10 bis 11 mit gleichen Bezugszeichen versehen, jedoch erhöht um die Zahl 1000. Die Deichsel 1026 wird nachfolgend nur insofern beschrieben, als sie sich von der oben beschriebenen Deichsel 26 unterscheidet, auf deren Beschreibung ansonsten ausdrücklich verwiesen wird.

Die Deichsel 1026 weist einen Deichselkörper 1027 mit einem ersten Deichselkörper-Bauteil 1026a auf, welches sich längs der Deichselkörper-Längsachse DL von einem dem Nachlauffahrzeugkörper näher gelegenen Fahrzeug-Längsende der Deichsel 1026 weg zu einem durch die Zugöse 1020 markierten axial bezogen auf die Deichselkörper-Längsachse DL entgegengesetzten Kupplungs-Längsende der Deichsel 1026 hin. In axialer Richtung vom Fahrzeug-Längsende weg schließt sich an das erste Deichselkörper-Bauteil 1026a das zweite Deichselkörper-Bauteil 1026b des Deichselkörpers 1027 an, welches mit dem ersten Deichselkörper-Bauteil 1026a in einem Festlege-Abschnitt 1130 (siehe Figur 11) befestigt ist. In diesem Festlegeabschnitt 1130 umgibt das zweite Deichselkörper-Bauteil 1026b das erste Deichselkörper-Bauteil 1026a radial außen, bevorzugt mit sehr geringen Spaltmaßen zwischen den einander gegenüberliegenden Wandabschnitten der Deichselkörper-Bauteile 1026a und 1026b. Besonders bevorzugt liegen wenigstens Teile der einander gegenüberliegenden Wandabschnitte von erstem und zweiten Deichselkörper-Bauteil 1026a bzw. 1026b im fertig montierten Zustand aneinander an.

Das erste Deichselkörper-Bauteil 1026a weist bei Betrachtung in einer zur Deichselkörper-Längsachse DL orthogonalen Schnittebene einen rechteckigen geschlossenen Querschnitt auf. Die Ecken des rechteckigen Querschnitts sind abgerundet ausgebildet.

Längs der Deichselkörper-Längsachse DL und längs der Deichselkörper-Höhenachse DH verlaufende Seitenwände des ersten Deichselkörper-Bauteils 1026a sind als Seitenwangen 1132 axial verlängert, um diese als Führungsabschnitte zur Bewegungsführung eines in einen Innenraum 1134 der Deichsel 1026 hinein absenkbaren Deckels 1136 zu nutzen.

Im Festlegeabschnitt 1130 sind das erste und das zweite Deichselkörper-Bauteil 1026a bzw. 1026b ausschließlich durch Befestigungsmittel, hier: Schrauben-Muttern-Kombinationen 1138, mit zur Deichselkörper-Längsachse DL orthogonalem Verlauf miteinander verbunden. Die Befestigungsmittel 1138 durchsetzen sowohl das erste wie auch das zweite Deichselkörper-Bauteil 1026a bzw. 1026b in einer Richtung orthogonal zur Deichselkörper-Längsachse DL.

Das zweite Deichselkörper-Bauteil 1026b weist einen ersten Bauteilabschnitt 1140 auf, welcher bei Betrachtung in einer zur Deichselkörper-Längsachse DL orthogonalen Schnittebene ebenfalls einen geschlossenen Querschnitt aufweist, ebenso wie das erste Deichselkörper-Bauteil 1026a.

Dem Bauteilabschnitt 1140 mit geschlossenem Querschnitt axial benachbart ist ein Bauteilabschnitt 1142 des zweiten Deichselkörper-Bauteils 1026b, in welchem das zweite Deichselkörper-Bauteil 1026b einen offenen Querschnitt aufweist. Der Bauteilabschnitt 1140 mit geschlossenem Querschnitt ist dabei der näher am ersten Deichselkörper-Bauteil 1026a gelegene, der auch zum Festlegeabschnitt 1130 beiträgt, während der Bauteilabschnitt 1142 mit offenem Querschnitt dem Kupplungs-Längsende der Deichsel 1026 näher gelegen ist.

Im Bauteilabschnitt 1140 mit geschlossenem Querschnitt weist das zweite Deichselkörper-Bauteil 1140 ebenfalls einen rechteckigen geschlossenen Querschnitt auf, umfassend eine Deichselkörperdecke 1144, einen von diesem längs der Deichsel-Höhenachse DH mit Abstand angeordneten Deichselkörper-Boden 1146 und zwei längs der Deichsel-Querachse DQ mit Abstand voneinander angeordnete Deichselkörper-Seitenschenkel 1148. Die Deichselkörper-Seitenschenkel 1148 verbinden die Deichselkörper-Decke 1144 mit dem Deichselkörper-Boden 1146.

Im Deichselkörper-Abschnitt 1142 mit offenem Querschnitt weist das zweite Deichselkörper-Bauteil 1026b nur den Deichselkörper-Boden 1148 und zwei parallele davon abstehende Deichselkörper-Seitenschenkel 1148 auf. In dem Deichselkörper-Abschnitt 1142 ist demnach keine Deichselkörper-Decke 1144 vorhanden. Darüber hinaus sind die Deichselkörper-Seitenschenkel 1148 in einem von dem der Zugöse 1020 nächstgelegenen Längsende des zweiten Deichselkörper-Bauteils 1026b ausgehenden Bereich des Deichselkörper-Abschnitts 1142 mit offenem Querschnitt längs der Deichselkörper-Höhenachse DH kürzer ausgebildet als im Deichselkörper-Abschnitt 1140 mit geschlossenem Querschnitt. Somit ist in dem Deichselkörper-Abschnitt 1142 mit offenem Querschnitt eine von außen zugängliche Öffnung 1150 gebildet, durch welche hindurch der Innenbereich 1134 der Deichsel 1026 zugänglich ist.

Durch diese Öffnung 1150 können beispielsweise Gegenstände, wie etwa Bordwerkzeug und dgl., in den Innenraum 1134 der Deichsel 1026 abgelegt und in geeigneter Weise befestigt werden. Somit ist die Deichsel 1026 beispielsweise als Stauraum nutzbar.

Im vorliegenden Ausführungsbeispiel ist die Öffnung 1150 durch den zuvor bereits erwähnten Deckel 1136 verschließbar und wahlweise zum Eingriff freigebbar. Der Deckel 1136 ist in seiner Gestalt der Öffnung 1150 nachgebildet, die er verschließen soll. An seinen Seiten weist der Deckel 1136 Vorsprünge 1152 auf, welche in Kulissenführungen 1154 in den Seitenwangen 1132 ausgebildet sind, die als Axial-Verlängerungen der Deichselkörper-Seitenschenkel des ersten Deichselkörper-Bauteils 1026a gebildet sind. Der Deckel 1136 ist somit längs der Deichselkörper-Höhenachse DH sowie längs der Deichselkörper-Längsachse DL in den Innenbereich 1134 der Deichsel 1026 absenkbar und einziehbar. In Figur 11 ist der Deckel 1136 mit durchgezogenem Strich in seiner in den Deichselinnenraum 1134 eingezogenen Inaktivstellung gezeigt und ist mit strichpunktierter Linie in seiner Aktivstellung gezeigt, in welcher er die Öffnung 1150 verschließt. Der Deckel 1136 ist längs der Pfeilfolge P in Figur 11 von der Inaktivstellung in die Aktivstellung verlagerbar.

Zur Abdichtung der Öffnung 1150 in der Aktivstellung des Deckels 1136 ist an der Öffnung 1150 eine Dichtung 1158 vorgesehen, an deren zum Deichselinnenbereich 1134 hinweisender Seite der Deckel 1136 in der Aktivstellung anliegt. Die Dichtung 1158 kann beispielsweise aus einer Gummimatte oder allgemein einer Elastomermatte ausgeschnitten sein.

Zur Verstellung des Deckels 1136 zwischen der Aktivstellung und der Inaktivstellung kann dieser mit einem Handbetätigungsglied 1160 gekoppelt sein, welches im dargestellten Beispiel die Deichsel 1026 längs der Deichselkörper-Querachse DQ durchsetzt. Hierzu weisen die Deichselkörper-Seitenschenkel 1148 im Bauteilabschnitt 1140 mit geschlossenem Querschnitt in axiale Richtung bezogen auf die Deichselkörper-Längsachse DL verlaufende Langlöcher 1162 auf, welche im fertig montierten Zustand von in etwa gleichformatigen Langlöchern 1164 in den Seitenschenkeln des ersten Deichselkörper-Bauteils 1026a überlagert sind.

Das Handbetätigungsglied weist beiderseits der Deichsel 1026 je einen Handeingriffsabschnitt 1160a auf, welche von außerhalb der Deichsel 1026 durch eine Bedienperson leicht ergriffen werden können.

Das Handbetätigungsglied 1160 ist außerdem über eine Verbindungsstange 1160b gelenkig mit einem Verbindungselement 1166 verbunden, welches einerseits, wie in Figur 11 erkennbar ist, mit dem Deckel 1136 verbunden ist, und welches andererseits als Federwiderlager für eine Vorspann-Schraubendruckfeder 1168 dient, die den Deckel 1136 in die Aktivstellung vorspannt. In den Figuren 10 und 11 nicht dargestellte Festlegemittel können vorgesehen sein, um den Deckel 1136 gegen die Vorspannkraft der Feder 1168 in der Inaktivstellung vorübergehend festzulegen.

Wie weiter in Figur 11 zu erkennen ist, ist das entgegengesetzte Federwiderlager der Schraubendruckfeder 1168 am Zugösen-Bauteil 1028 festgelegt, beispielsweise durch eine in dieses eingedrehte Ringschraube 1170.

Das Zugösen-Bauteil 1028 ist in seiner Gestalt und in seiner Befestigung am Deichselkörper 1027, genauer am zweiten Deichselkörper-Bauteil 1026b, ebenfalls bemerkenswert:
Das Zuösen-Bauteil 1028 weist einerseits an einem Längsende die Zugöse 1020 auf und weist an seinem anderen Längsende eine Befestigungsformation 1172 auf.

Das Zugösen-Bauteil 1028, insbesondere seine Befestigungsformation 1172, ist im fertig montierten Zustand von nur drei Seiten von der Deichsel 1026, genauer vom zweiten Deichselkörper-Bauteil 1026b, noch genauer von dem Deichselkörper-Abschnitt 1142 mit offenem Querschnitt, bezogen auf die Deichselkörper-Längsachse DL radial außen umgeben. Dies bedeutet, die Befestigungsformation 1172 des Zugösen-Bauteils 1028 liegt auf dem Deichselkörper-Boden 1148 der Deichsel 1026, genauer des zweiten Deichselkörper-Bauteils 1026b, auf und ist längs der Deichselkörper-Querachse DQ zu beiden Seiten von den Deichselkörper-Seitenschenkeln 1148 eingefasst, die in dem betreffenden Überlappungsabschnitt mit der Befestigungsformation 1172 des Zugösen-Bauteils 1028 in Deichselkörper-Höhenrichtung verglichen mit dem Abschnitt 1140 mit geschlossenem Querschnitt verkürzt ausgebildet sind.

Insbesondere ist das Zugösen-Bauteil 1028 axial in einer Auszugsrichtung aus dem Deichselkörper 1027, also zu einem vor der Deichsel 1026 befindlichen Zugfahrzeug hin, nicht formschlüssig durch einen Deichselkörper-Abschnitt umgriffen oder sonst wie hintergriffen.

Wie bereits die beiden Deichselkörper-Bauteile 1026b und 1026a ist auch das Zugösen-Bauteil 1028 in dem mit ihm überlappenden Deichselkörper-Befestigungsabschnitt 1174 des zweiten Deichselkörper-Bauteils 1026b ausschließlich mit Befestigungsmitteln am zweiten Deichselkörper-Bauteil 1026b befestigt, welche das zweite Deichselkörper-Bauteil 1026b in einer Richtung orthogonal zur Deichselkörper-Längsachse DL durchsetzen und die Befestigungsformation 1172 des Zugösen-Bauteils 1028 entweder ebenfalls orthogonal zur Deichselkörper-Längsachse DL durchsetzen oder in dieser Richtung in die Befestigungsformation einragen. Im dargestellten Beispiel sind die Befestigungsmittel 1176 in Form von Schrauben in Sacklöcher 1178 in der Befestigungsformation 1172 des Zugösen-Bauteils 1028 eingedreht. Die Sacklöcher 1178 sind hierzu mit einem Innengewinde versehen. Die Befestigungsformation 1172 ist im dargestellten Beispiel U-förmig ausgebildet, wobei die beiden Seitenschenkel der Befestigungsformation 1172 längs der Deichselkörper-Längsachse DL von der die Seitenschenkel verbindenden Basis der Befestigungsformation 1172 abstehen. mit der Basis ist die Zugöse 1020 vorzugsweise einstückig materialschlüssig verbunden.

Die Durchgangslöcher für Schrauben sowie die Durchgangslanglöcher 1162 und 1164 in den jeweiligen Deichselkörper-Bauteilen 1026a und 1026b sind geringfügige Durchsetzungen dieser Bauteile und sollen nichts an der Beurteilung des sie tragenden Abschnitts als einem Abschnitt mit geschlossenem Querschnitt ändern.

Der Deckel 1136 kann nicht nur die Öffnung 1150 verschließen, sondern kann außerdem eine Funktionsbaugruppe tragen, wie etwa die Baugruppe 1180 zur automatisierten Herstellung einer Energie oder/und Information übertragenden Verbindung mit einem an die Deichsel 1026 angekuppelten Zugfahrzeug.

In Figur 11 ist die Funktionsbaugruppe 1180 mit durchgezogener Linie in ihrer Nicht-Gebrauchsstellung, also mit dem Deckel 1136 in der Inaktivstellung, dargestellt. In vorteilhafter Weise ist die Funktionsbaugruppe 1180, die in der Aktivstellung des Deckels 1136 nahe an das zugfahrzeugseitige Kupplungsbauteil herangeführt ist, mit dem die Zugöse 1020 kuppelbar ist, in der Inaktivstellung des Deckels 1136 innerhalb der Einhüllenden des zweiten Deichselkörper-Bauteils 1026b aufgenommen, welche man erhält, wenn man dessen Abschnitt 1140 mit geschlossenem Querschnitt über die ganze axiale Länge des zweiten Deichselkörper-Bauteils 1026b fortgesetzt denkt. Durch die so erhaltene geringe Auskragabmessung der Funktionsbaugruppe 1180 in ihrer Nicht-Gebrauchsstellung ist deren Beschädigungsrisiko bei Nichtgebrauch erheblich reduziert. Teile der Funktionsbaugruppe 1180 sind in deren Nicht-Gebrauchsstellung sogar im Inneren 1134 der Deichsel 1026 aufgenommen und ist allseits von einer Deichselwandung des Abschnitts 1140 mit geschlossenem Querschnitt umgeben.

## Patentansprüche

1. Kupplungsvorrichtung (10) zur vorübergehenden Verbindung eines Zugfahrzeugs mit einem Nachlauffahrzeug zur Bildung eines Fahrzeugzuges, wobei die Kupplungsvorrichtung (10) aufweist:
- ein zugfahrzeugseitiges Kupplungsbauteil (14),
- ein nachlauffahrzeugseitiges Kupplungsbauteil (24), wobei das zug- und das nachlauffahrzeugseitige Kupplungsbauteil (14, 24) zur Bildung einer vorübergehenden Kupplungsverbindung miteinander lösbar kuppelbar sind, wobei die Kupplungsverbindung zur Übertragung einer ein Nachlaufen des Nachlauffahrzeugs im Fahrzeugzug begründenden Zugkraft ausgebildet ist,
- ein zugfahrzeugseitiges Steckerbauteil (30) mit wenigstens einer Steckerformation (34) als Schnittstelle einer zugfahrzeugseitigen Versorgungsleitung zur Übertragung von Energie oder/und Information,
- ein nachlauffahrzeugseitiges Steckerbauteil (32) mit wenigstens einer Steckerformation (36) als Schnittstelle einer nachlauffahrzeugseitigen Versorgungsleitung zur Übertragung von Energie oder/und Information, wobei das zug- und das nachlauffahrzeugseitige Steckerbauteil (30, 32) zur Bildung einer vorübergehenden Energie oder/und Information übertragenden Steckerverbindung miteinander lösbar verbindbar sind,
- ein gesondert vom zugfahrzeugseitigen Kupplungsbauteil (14) ausgebildetes und an diesem angeordnetes zugfahrzeugseitiges Ausrichtbauteil (38), welches das zugfahrzeugseitige Steckerbauteil (30) trägt,
- ein gesondert vom nachlauffahrzeugseitigen Kupplungsbauteil (24) ausgebildetes und an diesem angeordnetes nachlauffahrzeugseitiges Ausrichtbauteil (40), welches das nachlauffahrzeugseitige Steckerbauteil (32) trägt,
wobei wenigstens ein Ausrichtbauteil (38, 40) aus zug- und nachlauffahrzeugseitigem Ausrichtbauteil (38, 40) eine Ausrichtformation (42, 44) aufweist und relativ zu dem es tragenden Kupplungsbauteil (14 24) beweglich ist, so dass die Ausrichtformation (42 oder 44) des einen Ausrichtbauteils (38 oder 40) zur steckerverbindungsvorbereitenden Ausrichtung der Steckerbauteile (30, 32) zueinander in Formschlusseingriff mit einer Ausrichtformation (44 oder 42) des jeweils anderen Ausrichtbauteils (40 oder 38) bringbar ist,
wobei das zug- und das nachlauffahrzeugseitige Ausrichtbauteil (38, 40) bei Erreichen oder Überschreiten einer vorbestimmten Annäherung aneinander gegen ein Entfernen voneinander sperrbar sind, **dadurch gekennzeichnet, dass** ein Bauteil (40) aus zug- und nachlauffahrzeugseitigem Ausrichtbauteil (38, 40) einen Sperrbügel (110) oder eine Sperröse aufweist und das jeweils andere Bauteil (38) einen Sperrhaken (80) aufweist, welcher dazu ausgebildet und angeordnet ist, den Sperrbügel (110) bzw. die Sperröse formschlüssig zu hintergreifen,wobei der Sperrhaken (80) beweglich ist zwischen einer Einführstellung, in welcher der Sperrbügel (110) bzw. die Sperröse in einer Einführrichtung an einem Hakenschenkel (80b) vorbei in ein Hakenmaul (80a) einführbar ist, und einer Sperrstellung, in welcher der Hakenschenkel (80b) den Sperrbügel (110) hintergreift bzw. die Sperröse durchsetzt und so den Sperrbügel (110) bzw. die Sperröse gegen ein Ausziehen entgegen der Einführrichtung sichert.

2. Kupplungsvorrichtung nach Anspruch 1,
**dadurch gekennzeichnet, dass** das Erreichen oder Überschreiten einer vorbestimmten Annäherung aneinander ein Erreichen oder Überschreiten einer vorbestimmten Einführtiefe eines Ausrichtvorsprungs (44) eines Ausrichtbauteils (40) in eine Ausrichtausnehmung (42) des jeweils anderen Ausrichtbauteils (38) ist.

3. Kupplungsvorrichtung nach Anspruch 1 oder 2,
**dadurch gekennzeichnet, dass** das zug- und das nachlauffahrzeugseitige Ausrichtbauteil (38, 40) selbsttätig sperrbar sind.

4. Kupplungsvorrichtung nach einem der vorhergehenden Ansprüche,
**dadurch gekennzeichnet, dass** der Sperrhaken einen Auslöseschenkel (80c) aufweist, welcher während der Bewegung des Sperrhakens (80) von seiner Einführstellung in seine Sperrstellung einen Riegel (74) von dessen Verriegelungsstellung in dessen Freigabestellung verstellt, welcher Riegel (74) verstellbar ist zwischen einer Verriegelungsstellung, in der er ein Steckerbauteil (30) aus zug- und nachlauffahrzeugseitigem Steckerbauteil (30, 32) mittelbar oder unmittelbar in einer Anfangsstellung gegen eine Bewegung zur einer Endstellung hin verriegelt, und einer Freigabestellung, in der er das Steckerbauteil (30) zur Bewegung zur Endstellung hin freigibt, wobei der Riegel (74) bevorzugt in die Verriegelungsstellung vorgespannt ist.

5. Kupplungsvorrichtung nach Anspruch 4,
**dadurch gekennzeichnet, dass** der Riegel (74) den Sperrhaken (80) gegen eine Bewegung von dessen Sperrstellung in dessen Einführstellung sichert.

6. Kupplungsvorrichtung nach einem der vorhergehenden Ansprüche,
**dadurch gekennzeichnet, dass** das zugfahrzeugseitige Kupplungsbauteil (14) ein Kupplungsglied aufweist, um dessen Längsmittelachse (KL) das nachlauffahrzeugseitige Kupplungsbauteil (24) bei hergestellter Kupplungsverbindung schwenken kann, wobei die Ausrichtformation (42) des zugfahrzeugseitigen Ausrichtbauteils (38) mit Abstand von der Längsmittelachse (KL) des Kupplungsglieds vorgesehen ist.

7. Kupplungsvorrichtung nach Anspruch 6,
**dadurch gekennzeichnet, dass** das zugfahrzeugseitige Kupplungsbauteil (14) umfasst:
- einen Kupplungskörper (16) mit einem Aufnahmeraum (17) zur Aufnahme einer nachlauffahrzeugseitigen Kupplungsöse (20),
- einen Kupplungsbolzen, welcher längs seiner Längsmittelachse (KL) verlagerbar ist zwischen einer Kupplungsstellung, in welcher er stärker in den Aufnahmeraum (17) einragt, und einer Lösestellung, in welcher er weniger stark in den Aufnahmeraum (17) einragt, und
- ein Fangmaul (18), welches relativ zum Kupplungskörper (16) um die Längsmittelachse (KL) des Kupplungsbolzens schwenkbar ist,
wobei das zugfahrzeugseitige Ausrichtbauteil (38) am Fangmaul (18) zur gemeinsamen Schwenkbewegung mit diesem um die Längsmittelachse (KL) des Kupplungsbolzens vorgesehen ist.

8. Kupplungsvorrichtung nach einem der vorhergehenden Ansprüche,
**dadurch gekennzeichnet, dass** die Ausrichtformation (42) des zugfahrzeugseitigen Ausrichtbauteils (38) um eine Nick-Ausrichtachse (NA) schwenkbar vorgesehen ist, welche zur Längsmittelachse (KL) eines Kupplungsglieds orthogonal ist oder/und welche zur Nickachse (ZQ) des Zugfahrzeugs parallel ist.

9. Kupplungsvorrichtung nach einem der Ansprüche 6 bis 8, unter Einbeziehung des Anspruchs 6,
**dadurch gekennzeichnet, dass** die Ausrichtformation (42) des zugfahrzeugseitigen Ausrichtbauteils (38) längs einer Zugfahrzeug-Höhenachse (ZH) relativ zum Kupplungsbauteil (16) verlagerbar ist.

10. Kupplungsvorrichtung nach Anspruch 9,
**dadurch gekennzeichnet, dass** die Vorspanneinrichtung (58) zwei koaxiale Federn (58) umfasst, welche die Ruhelage der Ausrichtformation (42) definieren und von welchen jede die Ausrichtformation (42) in eine andere von zwei entgegengesetzten Richtungen längs der Zugfahrzeug-Höhenachse (ZH) vorspannt.

11. Kupplungsvorrichtung nach einem der Ansprüche 6 bis 10, unter Einbeziehung des Anspruchs 6,
**dadurch gekennzeichnet, dass** die Ausrichtformation (42) des zugfahrzeugseitigen Ausrichtbauteils (38) längs einer Mehrzahl paralleler und mit Abstand voneinander angeordneter Führungseinrichtungen (46, 48) zur Bewegung längs der Zugfahrzeug-Höhenachse (ZH) geführt ist.

12. Kupplungsvorrichtung nach Anspruch 11,
**dadurch gekennzeichnet, dass** an jeder Führungseinrichtung (46, 48) je ein Gelenk (56, 60), welches eine Drehung um wenigstens eine zur Zugfahrzeug-Höhenachse (ZH) orthogonale Drehachse gestattet, längs der Zugfahrzeug-Höhenachse (ZH) verschieblich geführt ist.

13. Kupplungsvorrichtung nach Anspruch 12, unter Einbeziehung des Anspruchs 9,
**dadurch gekennzeichnet, dass** an jeder Führungseinrichtung (46, 48) das jeweilige Gelenk (56, 60) durch je eine Vorspanneinrichtung (58) aus einer Ruhelage heraus jeweils gegen Vorspannkraft in entgegengesetzte Richtungen längs der Zugfahrzeug-Höhenachse (ZH) verlagerbar ist.

14. Kupplungsvorrichtung nach einem der vorhergehenden Ansprüche,
**dadurch gekennzeichnet, dass** die Ausrichtformation (44) des einen Ausrichtbauteils (40) aus zug- und nachlauffahrzeugseitigem Ausrichtbauteil (38, 40) einen sich zu seinem freien Längsende hin verjüngenden Ausrichtvorsprung (44) und die Ausrichtformation (42) des jeweils anderen Ausrichtbauteils (38) eine zum Ausrichtvorsprung (44) wenigstens abschnittsweise komplementäre sich zu ihrem freien Längsende aufweitende Ausrichtausnehmung (42) als ein Ausrichtmaul aufweist, wobei der Ausrichtvorsprung (44) zur Einführung in die Ausrichtausnehmung (42) ausgebildet ist.

15. Kupplungsvorrichtung nach Anspruch 14,
**dadurch gekennzeichnet, dass** der Ausrichtvorsprung (44) einen konische oder/und kegelstumpfförmige oder/und tetraedrische oder/und pyramidonale oder/und allgemein polyedrische sich verjüngende Gestalt aufweist und dass die Ausrichtausnehmung (42) eine entsprechende negativ-konische oder/und negativ-kegelstumpfförmige oder/und negativ-tetraedrische oder/und negativ-pyramidonale oder/und allgemein negativ-polyedrische sich verjüngende Gestalt aufweist.

## Claims

1. A hitching apparatus (10) for temporary connection of a towing vehicle to a towed vehicle in order to constitute a vehicle combination, the hitching apparatus (10) comprising:
- a towing vehicle-side hitch component (14);
- a towed vehicle-side hitch component (24), the towing vehicle-side and towed vehicle-side hitch components (14, 24) being releasably hitchable to one another in order to constitute a temporary hitched connection, the hitched connection being embodied to transfer a towing force on which towing of the towed vehicle in the vehicle combination is based;
- a towing vehicle-side insertion connector component (30), having at least one insertion connector configuration (34) as an interface of a towing vehicle-side supply lead for transferring energy and/or information;
- a towed vehicle-side insertion connector component (32), having at least one insertion connector configuration (36) as an interface of a towed vehicle-side supply lead for transferring energy and/or information, the towing vehicle-side and towed vehicle-side insertion connector components (30, 32) being releasably connectable to one another in order to constitute a temporary energy- and/or informationtransferring insertion connection;
- a towing vehicle-side alignment component (38), embodied separately from the towing vehicle-side hitch component (14) and arranged thereon, which carries the towing vehicle-side insertion connector component (30);
- a towed vehicle-side alignment component (40), embodied separately from the towed vehicle-side hitch component (24) and arranged thereon, which carries the towed vehicle-side insertion connector component (32),
at least one alignment component (38, 40) from among the towing vehicle-side and the towed vehicle-side alignment component (38, 40) comprising an alignment configuration (42, 44) and being movable relative to the hitch component (14, 24) that carries it, so that the alignment configuration (42 or 44) of the one alignment component (38 or 40) is conveyable, for mutual insertion connection-preparing alignment of the insertion connector components (30, 32), into positive engagement with an alignment configuration (44 or 42) of the respective other alignment component (40 or 38),
the towing vehicle-side and towed vehicle-side alignment components (38, 40) being lockable, upon reaching or exceeding a predetermined proximity to one another, to prevent removal from one another,
**characterized in that** one component (40) from among the towing vehicle-side and the towed vehicle-side alignment component (38, 40) comprises a locking shackle (110) or a locking eye, and the respective other component (38) comprises a locking hook (80) that is embodied and arranged to engage positively behind the locking shackle (110) or the locking eye, the locking hook (80) being movable between an introduction position in which the locking shackle (110) or locking eye is introducible in an introduction direction past a hook limb (80b) into a hook jaw (80a), and a locked position in which the hook limb (80b) engages behind the locking shackle (110) or passes through the locking eye and thereby secures the locking shackle (110) or locking eye against being pulled out oppositely to the introduction direction.

2. The hitching apparatus according to Claim 1,
**characterized in that** the reaching or exceeding of a predetermined proximity to one another is a reaching or exceeding of a predetermined introduction depth of an alignment projection (44) of one alignment component (40) into an alignment recess (42) of the respective other alignment component (38).

3. The hitching apparatus according to Claim 1 or 2,
**characterized in that** the towing vehicle-side and towed vehicle-side alignment components (38, 40) are automatically lockable.

4. The hitching apparatus according to one of the preceding claims,
**characterized in that** the locking hook comprises a release limb (80c) that, during the movement of the locking hook (80) from its introduction position into its locked position, displaces a latching bar (74) from its latching position into its release position, which latching bar (74) is displaceable between a latching position in which it latches one insertion connector component (30) from among the towing vehicle-side and towed vehicle-side insertion components (30, 32) indirectly or directly in an initial position against movement toward a final position, and a release position in which it releases the insertion connector component (30) to move toward the final position, the latching bar (74) preferably being preloaded into the latching position.

5. The hitching apparatus according to Claim 4,
**characterized in that** the latching bar (74) secures the locking hook (80) against movement from its locked position into its introduction position.

6. The hitching apparatus according to one of the preceding claims,
**characterized in that** the towing vehicle-side hitching component (14) comprises a hitching member around whose longitudinal center axis (KL) the towed vehicle-side hitching component (24) can pivot when a hitched connection is made, the alignment configuration (42) of the towing vehicle-side alignment component (38) being provided at a distance from the longitudinal center axis (KL) of the hitching member.

7. The hitching apparatus according to Claim 6,
**characterized in that** the towing vehicle-side hitching component (14) encompasses:
- a hitching body (16) having a receiving space (17) for receiving a towed vehicle-side hitching eye (20);
- a hitching bolt that is displaceable along its longitudinal center axis (KL) between a hitched position in which it projects farther into the receiving space (17) and a detached position in which it projects less far into the receiving space (17);
- a coupling jaw (18) that is pivotable around the longitudinal center axis (KL) of the hitching bolt relative to the hitching body (16),
the towing vehicle-side alignment component (38) being provided on the coupling jaw (18) for a common pivoting movement with it around the longitudinal center axis (KL) of the hitching bolt.

8. The hitching apparatus according to one of the preceding claims,
**characterized in that** the alignment configuration (42) of the towing vehicle-side alignment component (38) is provided pivotably around a pitch alignment axis (NA) that is orthogonal to the longitudinal center axis (KL) of a hitching member and/or is parallel to the pitch axis (ZQ) of the towing vehicle.

9. The hitching apparatus according to one of Claims 6 to 8, including Claim 6,
**characterized in that** the alignment configuration (42) of the towing vehicle-side alignment component (38) is displaceable relative to the hitching component (16) along a vertical towing-vehicle axis (ZH).

10. The hitching apparatus according to Claim 9,
**characterized in that** the preload device (58) encompasses two coaxial springs (58), which define the inactive position of the alignment configuration (42) and which each preload the alignment configuration (42) in a different one of two opposite directions along the vertical towing-vehicle axis (ZH).

11. The hitching apparatus according to one of Claims 6 to 10, including Claim 6,
**characterized in that** the alignment configuration (42) of the towing vehicle-side alignment component (38) is guided to move along the vertical towing-vehicle axis (ZH) along a plurality of parallel guidance devices (46, 48) that are arranged at a distance from one another.

12. The hitching apparatus according to Claim 11,
**characterized in that** on each guidance device (46, 48), a joint (56, 60) that permits a rotation around at least one rotation axis orthogonal to the vertical towing-vehicle axis (ZH) is guided shiftably along the vertical towing-vehicle axis (ZH).

13. The hitching apparatus according to Claim 12, including Claim 9,
**characterized in that** on each guidance device (46, 48), the respective joint (56, 60) is displaceable by a respective preloading device (58) out of an inactive position, in opposite directions along the vertical towing-vehicle axis (ZH), against a respective preload force.

14. The hitching apparatus according to one of the preceding claims,
**characterized in that** the alignment configuration (44) of the one alignment component (40) from among the towing vehicle-side and the towed vehicle-side alignment component (38, 40) comprises an alignment projection (44) that tapers toward its free longitudinal end, and the alignment configuration (42) of the respective other alignment component (38) comprises an alignment recess (42), constituting an alignment jaw, which widens toward its free longitudinal end in a manner at least locally complementary to the alignment projection (44), the alignment projection (44) being embodied for introduction into the alignment recess (42).

15. The hitching apparatus according to Claim 14,
**characterized in that** the alignment projection (44) has a shape that tapers in conical and/or frustoconical and/or tetrahedral and/or pyramidal and/or generally polyhedral fashion; and the alignment recess (42) has a corresponding shape that tapers in negatively conical and/or negatively frustoconical and/or negatively tetrahedral and/or negatively pyramidal and/or generally negatively polyhedral fashion.

## Revendications

1. Dispositif d'accouplement (10) pour relier temporairement un véhicule tracteur à un véhicule tracté pour former un train de véhicules, dans lequel le dispositif d'accouplement (10) comprend :
- un composant d'accouplement du côté du véhicule tracteur (14),
- un composant d'accouplement du côté du véhicule tracté (24), les composants d'accouplement du côté du véhicule tracteur et du côté du véhicule tracté (14, 24) pouvant être accouplés de manière amovible pour former une connexion d'accouplement temporaire, la connexion d'accouplement étant adaptée pour transmettre une force de traction qui fait suivre le véhicule tracté dans le train de véhicules,
- un composant de connecteur du côté du véhicule tracteur (30) avec au moins une formation de connecteur (34) comme interface d'une ligne d'alimentation du côté du véhicule tracteur pour transmettre de l'énergie et/ou des informations,
- un composant de connecteur du côté du véhicule tracté (32) avec au moins une formation de connecteur (36) comme interface d'une ligne d'alimentation du côté du véhicule tracté pour transmettre de l'énergie et/ou des informations, le composant de connecteur du côté du véhicule tracté et le composant de connecteur du côté du véhicule tracté (30, 32) pouvant être connectés de manière amovible pour former une connexion de connecteur temporaire pour transmettre de l'énergie et/ou des informations,
- un composant d'alignement (38) qui est formé séparément du composant d'accouplement du côté du véhicule tracteur (14), et disposé sur ce dernier qui porte le composant de connecteur du côté du véhicule tracteur (30),
- un composant d'alignement (40) qui est formé séparément du composant d'accouplement du côté du véhicule tracté (24), et disposé sur ce dernier qui porte le composant de connecteur du côté du véhicule tracté (32),
dans lequel au moins un composant d'alignement (38, 40) parmi le composant d'alignement du côté du véhicule tracteur et le composant d'alignement du côté du véhicule tracté (38, 40) comprend une formation d'alignement (42, 44), et est mobile par rapport au composant d'accouplement (14, 24) qui la porte, de sorte que la formation d'alignement (42 ou 44) de l'un des composants d'alignement (38 ou 40) peut être utilisée pour aligner les composants de connecteur (30, 32) en préparation pour la connexion par connecteur en engagement de forme l'un avec l'autre avec une formation d'alignement (44 ou 42) de l'autre composant d'alignement respectif (40 ou 38),
dans lequel le composant d'alignement du côté du véhicule tracteur et le composant d'alignement du côté du véhicule tracté (38, 40) peuvent être verrouillés contre un enlèvement l'un de l'autre quand une approche prédéterminée est atteinte ou dépassée,
**caractérisé en ce que**
un composant (40) parmi le composant d'alignement du côté du véhicule tracteur et le composant d'alignement du côté du véhicule tracté (38, 40) comprend une goupille de verrouillage (110) ou un œillet de verrouillage, et l'autre composant respectif (38) comprend un crochet de verrouillage (80), qui est adapté et arrangé pour venir en prise par engagement de forme avec la goupille de verrouillage (110) ou l'œillet de verrouillage, le crochet de verrouillage (80) étant mobile entre une position d'insertion, dans laquelle la goupille de verrouillage (110) ou l'œillet de verrouillage peut être inséré dans une bouche de crochet (80a) dans une direction d'insertion au-delà d'une jambe de crochet (80b), et une position de verrouillage dans laquelle la jambe de crochet (80b) s'engage derrière la goupille de verrouillage (110) ou traverse l'œillet de verrouillage et maintient ainsi la goupille de verrouillage (110) ou l'œillet de verrouillage contre une extraction dans la direction d'insertion opposée.

2. Dispositif d'accouplement selon la revendication 1,
**caractérisé en ce que** le fait d'atteindre ou de dépasser une approche prédéterminée l'un de l'autre veut dire atteindre ou dépasser une profondeur d'insertion prédéterminée d'une saillie d'alignement (44) d'un composant d'alignement (40) dans un évidement d'alignement (42) de l'autre composant d'alignement respectif (38).

3. Dispositif d'accouplement selon la revendication 1 ou 2,
**caractérisé en ce que** le composant d'alignement (38, 40) du côté du véhicule tracteur et le composant d'alignement du côté du véhicule tracté peuvent être verrouillés automatiquement.

4. Dispositif d'accouplement selon l'une des revendications précédentes,
**caractérisé en ce que** le crochet de verrouillage présente une jambe de déverrouillage (80c) qui, lors du déplacement du crochet de verrouillage (80) de sa position d'insertion dans sa position de verrouillage, déplace un verrou (74) de sa position de verrouillage dans sa position de déverrouillage, lequel verrou (74) peut être déplacé entre une position de verrouillage, dans laquelle il bloque un composant de connecteur (30) parmi le composant de connecteur du côté du véhicule tracté et le composant de connecteur du côté du véhicule tracté (30, 32) indirectement ou directement dans une position initiale, contre un mouvement vers une position finale, et une position de déverrouillage, dans laquelle il libère le composant de connecteur (30) pour un mouvement vers la position finale, le verrou (74) étant de préférence précontraint vers la position de verrouillage.

5. Dispositif d'accouplement selon la revendication 4,
**caractérisé en ce que** le verrou (74) bloque le crochet de verrouillage (80) contre tout mouvement à partir de sa position de verrouillage dans sa position d'insertion.

6. Dispositif d'accouplement selon l'une des revendications précédentes,
**caractérisé en ce que** le composant d'accouplement du côté du véhicule tracteur (14) comporte un élément d'accouplement, autour de l'axe central longitudinal (KL) duquel le composant d'accouplement du côté du véhicule tracté (24) peut pivoter lorsque l'accouplement est réalisé, la formation d'alignement (42) du composant d'alignement du côté du véhicule tracteur (38) étant prévue à une certaine distance de l'axe central longitudinal (KL) de l'élément d'accouplement.

7. Dispositif d'accouplement selon la revendication 6,
**caractérisé en ce que** le composant d'accouplement du côté du véhicule tracteur (14) comprend :
- un corps d'accouplement (16) avec un espace de réception (17) pour recevoir un œillet d'accouplement du côté du véhicule tracté (20),
- un boulon d'accouplement qui peut être déplacé le long de son axe central longitudinal (KL) entre une position d'accouplement, dans laquelle il fait plus saillie dans l'espace de réception (17), et une position de déverrouillage, dans laquelle il fait moins saillie dans l'espace de réception (17), et
- une bouche d'arrêt (18) qui peut pivoter autour de l'axe central longitudinal (KL) du boulon d'accouplement par rapport au corps d'accouplement (16), le composant d'alignement du côté du véhicule tracteur (38) étant prévu à la bouche d'arrêt (18) pour un mouvement de pivotement commun avec celle-ci autour de l'axe central longitudinal (KL) du boulon d'accouplement.

8. Dispositif d'accouplement selon l'une des revendications précédentes,
**caractérisé en ce que** la formation d'alignement (42) du composant d'alignement du côté du véhicule tracteur (38) est prévue de manière pivotante autour d'un axe d'alignement de tangage (NA) qui est orthogonal à l'axe central longitudinal (KL) d'un élément d'accouplement ou/et qui est parallèle à l'axe de tangage (ZQ) du véhicule tracteur.

9. Dispositif d'accouplement selon l'une des revendications 6 à 8, y compris la revendication 6,
**caractérisé en ce que** la formation d'alignement (42) du composant d'alignement du côté du véhicule tracteur (38) peut être déplacée le long d'un axe de hauteur du véhicule tracteur (ZH) par rapport au composant d'accouplement (16).

10. Dispositif d'accouplement selon la revendication 9,
**caractérisé en ce que** le dispositif de précontrainte (58) comprend deux ressorts coaxiaux (58) qui définissent la position de repos de la formation d'alignement (42) et dont chacun sollicite la formation d'alignement (42) dans une autre de deux directions opposées selon l'axe de hauteur du véhicule tracteur (ZH).

11. Dispositif d'accouplement selon l'une des revendications 6 à 10, y compris la revendication 6,
**caractérisé en ce que** la formation d'alignement (42) du composant d'alignement du côté du véhicule tracteur (38) est guidée le long d'une pluralité de moyens de guidage parallèles et espacés (46, 48) pour un déplacement le long de l'axe de hauteur du véhicule tracteur (ZH).

12. Dispositif d'accouplement selon la revendication 11,
**caractérisé en ce que** sur chaque dispositif de guidage (46, 48) une articulation respective (56, 60), qui permet une rotation autour d'au moins un axe de rotation orthogonal à l'axe de hauteur du véhicule tracteur (ZH), est guidée de manière mobile le long de l'axe de hauteur du véhicule tracteur (ZH).

13. Dispositif d'accouplement selon la revendication 12, y compris la revendication 9,
**caractérisé en ce que** sur chaque dispositif de guidage (46, 48) l'articulation respective (56, 60) peut être déplacée par un dispositif de précontrainte respectif (58) hors d'une position de repos contre une force de précontrainte dans des directions opposées le long de l'axe de hauteur du véhicule tracteur (ZH).

14. Dispositif d'accouplement selon l'une des revendications précédentes,
**caractérisé en ce que** la formation d'alignement (44) d'un composant d'alignement (40) parmi le composant d'alignement du côté du véhicule tracteur et le composant d'alignement du côté du véhicule tracté (38, 40) comprend une saillie d'alignement (44) s'amincissant vers son extrémité longitudinale libre et la formation d'alignement (42) de l'autre composant d'alignement respectif (38) comprend un évidement d'alignement (42) qui est complémentaire au moins par sections à la saillie d'alignement (44) et s'élargit vers son extrémité longitudinale libre, comme bouche d'alignement, la saillie d'alignement (44) étant adaptée pour l'insertion dans l'évidement d'alignement (42).

15. Dispositif d'accouplement selon la revendication 14,
**caractérisé en ce que** la saillie d'alignement (44) a une forme s'amincissant de manière conique et/ou tronconique et/ou tétraédrique et/ou pyramidale et/ou généralement polyédrique et **en ce que** l'évidement d'alignement (42) a une forme correspondante conique négative ou/et tronconique négative et/ou tétraédrique négative et/ou pyramidonale négative ou/et globalement polyédrique négative.
